(19) Europäisches Patentamt
European Patent Office
Office européen des brevets

(11) **EP 4 773 577 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*H04L 67/06* (2022.01)   *G06F 9/451* (2018.01)

(21) Application number: 25802886.9

(52) Cooperative Patent Classification (CPC):
G06F 9/451; H04L 9/40; H04L 67/06;
H04L 67/1095

(22) Date of filing: 12.05.2025

(86) International application number:
PCT/CN2025/094274

(87) International publication number:
WO 2025/237238 (20.11.2025 Gazette 2025/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 14.05.2024 CN 202410601613

(71) Applicant: HUAWEI TECHNOLOGIES CO., LTD.
Shenzhen 518129 (CN)

(72) Inventors:
• LENG, Yongqiang
  Shenzhen, Guangdong 518129 (CN)
• LUO, Pengfei
  Shenzhen, Guangdong 518129 (CN)

(74) Representative: Maiwald GmbH
Engineering
Elisenhof
Elisenstrasse 3
80335 München (DE)

(54) **INFORMATION TRANSMISSION METHOD, AND ELECTRONIC DEVICE**

(57) This application provides an information transmission method, an electronic device, and a system. The method may be applied to an electronic device, and includes: When there is a device around a first electronic device, the first electronic device may be configured to display a first image, where the image includes a first part and a second part; a second electronic device may obtain N frames of first images, and identify first information encoded in the second part, for implementing device connection, data transmission, account login, conference attendance, and the like based on the first information. In this technical solution, the second electronic device may scan the image displayed by the first electronic device to obtain the first information in the image, for implementing information transmission between the second electronic device and the first electronic device. For example, when migration to a new device or data clone is performed, this solution can shorten a path for device interaction, and enhance the sense of technological sophistication.

FIG. 12

## Description

This application claims priority to Chinese Patent Application No. 202410601613.4, filed with the China National Intellectual Property Administration on May 14, 2024 and entitled "INFORMATION TRANSMISSION METHOD AND ELECTRONIC DEVICE", which is incorporated herein by reference in its entirety.

## TECHNICAL FIELD

This application relates to the field of electronic technologies, and more specifically, to an information transmission method and an electronic device.

## BACKGROUND

In some scenarios in which information transmission needs to be performed between devices, methods such as scanning QR codes are typically used for connection and pairing among devices, account login, and the like. For example, when a user performs device migration or data clone by using a first device, data needs to be transmitted from a second device to the first device, and the second device needs to scan a QR code displayed on the first device to perform connection and pairing. However, such a QR code scanning method involves a lengthy interaction path and is not sufficiently interaction.

## SUMMARY

Embodiments of this application provide an information transmission method and an electronic device. In this technical solution, a second electronic device may scan an image displayed by a first electronic device to obtain first information in the image, for implementing information transmission between the second electronic device and the first electronic device. For example, when migration to a new device or data clone is performed, a path for device interaction can be shortened, and a sense of technology can be improved.

According to a first aspect, this application provides a system, including a first electronic device and a second electronic device. The first electronic device is configured to send a first message, where the first message is used to search for a device around the first electronic device. The second electronic device is configured to: receive the first message; and send first indication information based on the first message. The first electronic device is further configured to display a first image based on the first indication information, where the first image includes a first part and a second part. The second electronic device is further configured to: obtain N frames of first images, where each of the N frames of first images includes a first part and a second part, positions of second parts in two adjacent frames of images in the N frames of images are the same, and N is greater than or equal to 2; and decode first information based on the second part.

It should be understood that the first part may be a background of the first image, and the second part may be a part in which the first information is encoded in the first image. For example, the second part may be superimposed in the first part.

The first information may include but is not limited to device connection information, account login information, a verification code, a website address, a link for attending a conference, data information that needs to be transmitted, projection information, and the like.

The device connection information may include but is not limited to a connection and pairing code, a product serial number, or a media access control MAC address.

The first indication information may indicate that there is a device around the first electronic device, or the first indication information may be confirmation information obtained after the first message is scanned.

It should be further understood that a specific operation performed by the second electronic device after the second electronic device obtains the first information is not limited in this embodiment of this application.

In another example, colors of the second parts in the two adjacent frames of images in the N frames of images may be different. Alternatively, colors of second parts in any three consecutive frames of images in the N frames of images may be different. This is not limited in this embodiment of this application.

In another example, the second parts in the two adjacent frames of images in the N frames of images may be for encoding same information or different information. When the second parts are for encoding different information, the first electronic device may divide information that needs to be encoded into a plurality of parts, and separately encode the plurality of parts in second parts in different frames of images. Alternatively, a plurality of consecutive frames of images in the N frames of images may be for encoding different information, and a plurality of groups of information may be encoded in the N frames of images. This is not limited in this embodiment of this application.

In another example, first parts in the two adjacent frames of images in the N frames of images may be the same or may be different. This is not limited in this embodiment of this application.

Based on the system provided in this embodiment of this application, the first electronic device may encode, in the second part in the first image, the first information that needs to be transmitted, and the second electronic device may obtain the N frames of first images, and obtain the first information through decoding based on the second part.

For example, during device connection, the second electronic device may scan or shoot the image displayed by the first electronic device, to obtain device connection information (a connection and pairing code) in the image, thereby quickly establishing a device connection. When migration to a new device or data clone is performed, a path for device interaction can be shortened, and a sense of technology can be improved.

In some implementations, before decoding the first information based on the second part, the second electronic device is further configured to perform color space conversion on the N frames of first images to obtain N frames of second images.

According to this embodiment of this application, the second electronic device performs color space conversion on the first image, so that impact caused by light reflection in the first image can be reduced.

For example, the first image is converted from RGB color space to HSV color space or hue, saturation, and intensity HSI color space.

In some implementations, the second electronic device is specifically configured to: convert the N frames of first images from the red, green, and blue RGB color space into the hue, saturation, and value HSV color space; perform filtering for a hue H domain of all of the N frames of first images to obtain the N frames of second images, where an angle value corresponding to a hue H domain included in the second image is greater than a first preset value and less than a second preset value; perform binarization processing on the N frames of second images to obtain N frames of third images; and determine the second part based on the N frames of third images.

It should be understood that specific values of the first preset value and the second preset value are not limited in this embodiment of this application.

According to this embodiment of this application, light reflection existing in the first image can be filtered out through color space conversion and corresponding threshold filtering, to reduce interference caused by the light reflection to obtaining the second part by the second electronic device, and improve a possibility of successful decoding.

In some implementations, the second electronic device is specifically configured to: perform a closing operation on the N frames of third images; and determine the second part based on a result of the closing operation; or perform cluster analysis on particles in the N frames of third images; and determine the second part based on a result of the cluster analysis.

According to this embodiment of this application, the second part is determined in a closing operation manner, so that the interference caused by the light reflection to obtaining the second part by the second electronic device can be reduced, and the possibility of successful decoding can be improved. In addition, when the second part is heavily blocked or has severe light reflection, the second part can still be successfully obtained based on the result of the cluster analysis, thereby improving a possibility that an electronic device successfully decodes the second part subsequently.

In some implementations, before performing cluster analysis on the N frames of third images, the second electronic device is further configured to filter out a particle whose area is less than a first area threshold in the N frames of third images.

According to this embodiment of this application, a particle with a small area in the third image can be filtered out, so that interference caused by the particle with the small area to obtaining the second part can be reduced.

In some implementations, the second electronic device is specifically configured to: perform intra-frame differential processing on the second part in each of the N frames of first images to obtain N frames of grayscale images, where the intra-frame differential processing involves taking an absolute value of a sum of differences between a first channel image in the second part and a second channel image and between the first channel image in the second part and a third channel image, and the first channel image, the second channel image, and the third channel image are distinct selections from a red R channel image, a green G channel image, and a blue B channel image; separately perform inter-frame differential processing on the N frames of grayscale images to obtain N frames of differential images; perform binarization processing on the N frames of differential images to obtain N frames of fourth images; perform OR operation processing on the N frames of fourth images to obtain a first target image; and obtain the first information based on the first target image.

For example, the first channel image is the B channel image, the second channel image is the R channel image, and the third channel image is the G channel image.

According to this embodiment of this application, the second electronic device may perform decoding based on second parts included in the N frames of images, to successfully obtain the first information encoded in the second parts.

In some implementations, the second electronic device is specifically configured to: filter out a particle whose area is less than a second area threshold in the first target image, to obtain a second target image; and decode the first information based on the second target image.

According to this embodiment of this application, a particle with a small area in the first target image can be filtered out by performing filtering on a particle in the first target image, so that interference caused by the particle with the small area to a decoding result can be reduced.

In some implementations, before the second electronic device performs binarization processing on the N frames of differential images, the second electronic device is further configured to: separately determine a severity of a moiré pattern in each of the N frames of differential images. The second electronic device is specifically configured to: filter out a pixel whose grayscale value is less than a third preset value in the N frames of differential images, where the third preset value is related to the severity of the moiré pattern; and perform binarization processing on N frames of filtered differential images to obtain the N frames of fourth images.

According to this embodiment of this application, the second electronic device may further determine the severity of the moiré pattern in the image, and set a filtering threshold based on the severity of the moiré pattern, thereby reducing interference caused by the moiré pattern and helping improve the probability of successful decoding.

In some implementations, the first electronic device is specifically configured to: send the first message after the first electronic device is started up for a first time; or when performing data clone, send the first message in response to an operation that is selected by a user and that indicates a new device, or in response to an operation that is selected by a user and that indicates an old device type.

In this way, when the electronic device is started up for the first time or when the electronic device is not started up for the first time to perform data clone, the electronic device may send the first message to the outside, to search for the surrounding device. This technical solution helps the first electronic device search for the device when needed, to perform a subsequent device connection operation, so that power consumption of the electronic device can be reduced to some extent.

In some implementations, the first electronic device is further configured to receive first data information sent by the second electronic device, where the first data information includes information about a logged-in account on the second electronic device and/or information about a wireless network connected to the second electronic device.

It should be understood that the information about the wireless network connected to the second electronic device may include a historically connected wireless network or a currently connected wireless network.

In another example, the first data information may further include content such as a privacy statement and a setting of the second electronic device. This is not limited in this embodiment of this application.

According to this embodiment of this application, the second electronic device sends data such as account information and wireless network information to the first electronic device, so that the user does not need to manually perform operations such as account login and wireless connection on the first electronic device, to improve operation experience of the user on the first electronic device. For example, the first electronic device is a smartphone newly purchased by the user. In this manner, the new mobile phone can automatically log in to an account of the user and automatically access a wireless network.

In some implementations, the first electronic device is further configured to: receive second indication information sent by the second electronic device, where the second indication information indicates second data information in the second electronic device; and display a second display interface based on the second indication information, where the second display interface includes a first display card and a second display card, the first display card indicates to import the second data information from the second electronic device, and the second display card indicates to download third data information from a cloud server.

According to this embodiment of this application, the first electronic device may display an option used for data transmission, for the user to select.

In some implementations, the first electronic device is further configured to: display a third display interface in response to an operation of tapping the first display card by the user, where the third display interface includes a type and a size of the second data information; send third indication information to the second electronic device in response to an operation that is performed by the user on the third display interface and that indicates to import data, where the third indication information indicates to start to import data corresponding to the second data information; and receive the data that is sent by the second electronic device and that corresponds to the second data information; or

display a fourth display interface in response to an operation of tapping the second display card by the user, where the fourth display interface includes a type and a size of the third data information; and import data corresponding to the third data information from the cloud server in response to an operation that is performed by the user on the fourth display interface and that indicates to import data.

According to this embodiment of this application, the first electronic device may implement transmission based on an operation of the user, so that the first electronic device can be quickly available.

In some implementations, the second part is a ring pattern, and a distance between the second electronic device and the first electronic device is less than or equal to a preset distance.

It should be understood that the second part may alternatively be in another shape. This is not limited in this embodiment of this application.

According to a second aspect, this application provides an information transmission method, applied to a second electronic device, including: receiving a first message; sending first indication information based on the first message; obtaining N frames of first images, where each of the N frames of first images includes a first part and a second part, positions of second parts in two adjacent frames of images in the N frames of images are the same, and N is greater than or equal to 2; and decoding first information based on the second part.

According to this embodiment of this application, the second electronic device may obtain the N frames of images, and decode second parts in the N frames of images, to obtain the first information in the second parts, and may perform a corresponding operation based on the first information. In this technical solution, information transmission between two devices can be conveniently implemented, an interaction path for information transmission between the devices can be shortened, and a sense of technology can be improved.

In an implementation, the method further includes: sending first data information to a first electronic device, where the first data information includes information about a logged-in account on the second electronic device and/or information about a wireless network connected to the second electronic device.

In another example, the first data information may further include content such as a privacy statement and a setting of the second electronic device. This is not limited in this embodiment of this application.

According to this embodiment of this application, the second electronic device sends data such as account information and wireless network information to the first electronic device, so that a user does not need to manually perform operations such as account login and wireless connection on the first electronic device, to improve operation experience of the user on the first electronic device. For example, the first electronic device is a smartphone newly purchased by the user. In this manner, the new mobile phone can automatically log in to an account of the user and automatically access a wireless network.

In an implementation, before decoding the first information based on the second part, the method further includes: performing color space conversion on the N frames of first images to obtain N frames of second images.

According to this embodiment of this application, the second electronic device performs color space conversion on the first image, so that impact caused by light reflection in the first image can be reduced.

In an implementation, the performing color space conversion on the N frames of first images to obtain the N frames of second images includes: converting the N frames of first images from red, green, and blue RGB color space into hue, saturation, and value HSV color space; and performing filtering for a hue H domain of all of the N frames of first images to obtain the N frames of second images, where an angle value corresponding to a hue H domain included in the second image is greater than a first preset value and less than a second preset value. The method further includes: performing binarization processing on the N frames of second images to obtain N frames of third images; and determining the second part based on the N frames of third images.

It should be understood that specific values of the first preset value and the second preset value are not limited in this embodiment of this application.

According to this embodiment of this application, light reflection existing in the first image can be filtered out through color space conversion and corresponding threshold filtering, to reduce interference caused by the light reflection to obtaining the second part by the second electronic device, and improve a possibility of successful decoding.

In an implementation, before decoding the first information based on the second part, determining the second part based on the N frames of third images includes: performing a closing operation on the N frames of third images; determining the second part based on a result of the closing operation; or performing cluster analysis on particles in the N frames of third images; and determining the second part based on a result of the cluster analysis.

According to this embodiment of this application, closing operation processing is performed on the third image, so that the interference caused by the light reflection to obtaining the second part by the second electronic device can be reduced, and the possibility of successful decoding can be improved. In addition, when the second part is heavily blocked or has severe light reflection, the second part can still be successfully obtained based on the result of the cluster analysis, thereby improving a possibility that an electronic device successfully decodes the second part subsequently.

In an implementation, before performing cluster analysis on the N frames of third images, the method further includes: filtering out a particle whose area is less than a first area threshold in the N frames of third images.

According to this embodiment of this application, a particle with a small area in the third image can be filtered out, so that interference caused by the particle with the small area to obtaining the second part can be reduced.

In an implementation, decoding the first information based on the second part includes: performing intra-frame differential processing on the second part in each of the N frames of first images to obtain N frames of grayscale images, where the intra-frame differential processing involves taking an absolute value of a sum of differences between a first channel image in the second part and a second channel image and between the first channel image in the second part and a third channel image, and the first channel image, the second channel image, and the third channel image are distinct selections from a red R channel image, a green G channel image, and a blue B channel image; separately performing inter-frame differential processing on the N frames of grayscale images to obtain N frames of differential images; performing binarization processing on the N frames of differential images to obtain N frames of fourth images; performing OR operation processing on the N frames of fourth images to obtain a first target image; and obtaining the first information based on the first target image.

For example, the first channel image is the B channel image, the second channel image is the R channel image, and the third channel image is the G channel image.

According to this embodiment of this application, the second electronic device may perform decoding based on the second parts included in the N frames of images, to successfully obtain the first information encoded in the second parts.

In an implementation, decoding the first information based on the first target image includes: filtering out a particle whose area is less than a second area threshold in the first target image, to obtain a second target image; and decoding the first information based on the second target image.

According to this embodiment of this application, a particle with a small area in the first target image can be filtered out by performing filtering on a particle in the first target image, so that interference caused by the particle with the small area to a decoding result can be reduced.

In an implementation, before performing binarization processing on the N frames of differential images, the method further includes: separately determining a severity of a moiré pattern in each of the N frames of differential images. Performing binarization processing on the N frames of differential images to obtain the N frames of fourth images includes: filtering out a pixel whose grayscale value is less than a third preset value in the N frames of differential images, where the third preset value is related to the severity of the moiré pattern; and performing binarization processing on N frames of filtered differential images to obtain the N frames of fourth images.

According to this embodiment of this application, the second electronic device may further determine the severity of the moiré pattern in the image, and set a filtering threshold based on the severity of the moiré pattern, thereby reducing interference caused by the moiré pattern and helping improve the probability of successful decoding.

In an implementation, the first information includes at least one of a connection and pairing code, account login information, a product serial number, and a media access control MAC address.

It should be understood that the first information may further include other information such as a verification code and a website address. This is limited in this embodiment of this application.

According to a third aspect, this application provides an electronic device, including one or more processors and one or more storages. The one or more storages store one or more programs, and when the one or more programs are executed by the one or more processors, the information transmission method according to any one of the second aspect and the possible implementations of the second aspect is performed.

According to a fourth aspect, this application provides an apparatus, including a module configured to implement the information transmission method according to any one of the second aspect and the possible implementations of the second aspect.

According to a fifth aspect, this application provides a chip, and the chip includes a processor and a communication interface. The communication interface is configured to: receive a signal, and transmit the signal to the processor, and the processor processes the signal, to cause the information transmission method according to any one of the second aspect and the possible implementations of the second aspect to be performed.

According to a sixth aspect, this application provides a readable storage medium. The readable storage medium stores instructions, and when the instructions are run on an electronic device, the information transmission method according to any one of the second aspect and the possible implementations of the second aspect is performed.

According to a seventh aspect, this application provides a program product. The program product includes program code, and when the program code is run on an electronic device, the information transmission method according to any one of the second aspect and the possible implementations of the second aspect is performed.

**BRIEF DESCRIPTION OF DRAWINGS**

FIG. 1 is a diagram of a structure of an electronic device according to an embodiment of this application;
FIG. 2 is a diagram of a software structure of an electronic device according to an embodiment of this application;
FIG. 3(a) to FIG. 3(k) are a diagram of a group of graphical user interfaces GUIs according to an embodiment of this application;
FIG. 4(a) to FIG. 4(g) are a diagram of a group of GUIs according to an embodiment of this application;
FIG. 5 is a diagram of full-screen display of an electronic device according to an embodiment of this application;
FIG. 6(a) to FIG. 6(k) are a diagram of another group of GUIs according to an embodiment of this application;
FIG. 7 shows a process of obtaining a ring pattern according to an embodiment of this application;
FIG. 8 shows another process of obtaining a ring pattern according to an embodiment of this application;
FIG. 9A and FIG. 9B are a diagram of obtaining device connection information according to an embodiment of this application;
FIG. 10 is a diagram of a ring region according to an embodiment of this application;
FIG. 11 is a diagram of determining a connection and pairing code with reference to results of a plurality of decodings according to an embodiment of this application;

FIG. 12 is an interaction diagram of an information transmission method according to an embodiment of this application;

FIG. 13 is a schematic flowchart of an information transmission method according to an embodiment of this application; and

FIG. 14 is a block diagram of any electronic device according to an embodiment of this application.

## DESCRIPTION OF EMBODIMENTS

The following describes technical solutions of this application with reference to accompanying drawings.

The method in embodiments of this application may be applied to an electronic device, for example, a smartphone, a tablet computer, a notebook computer, a personal computer (personal computer, PC), an ultra-mobile personal computer (ultra-mobile personal computer, UMPC), a netbook, a vehicle-mounted device, a smart television, a wearable device, a foldable device, and an internet of things (internet of things, IoT) device.

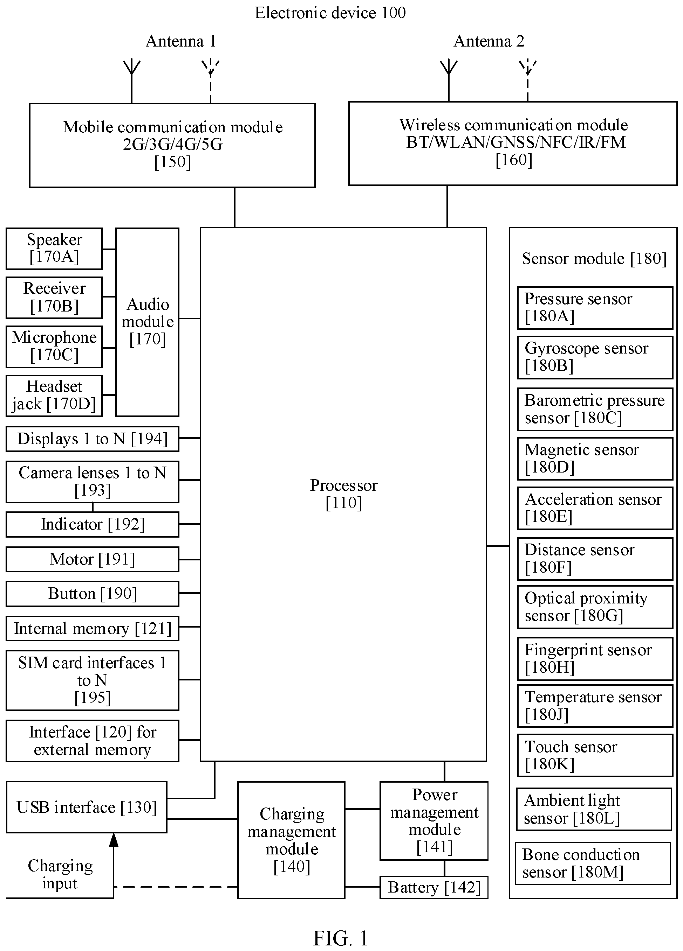

FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera lens 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

In this embodiment of this application, the processor 110 or the GPU may include an encoding module, and the encoding module may be configured to encode device connection information. For example, the processor 110 or the GPU encodes and superimposes a connection and pairing code into a ring pattern.

The processor 110 or the GPU may include a feature enhancement module. The feature enhancement module may be configured to extract a feature particle, perform filtering on a particle, superimpose the particle, or the like.

The processor 110 or the GPU may further include a decoding module. The decoding module may be configured to: decode the feature particle, and obtain the connection and pairing code.

The processor 110 or the GPU may further include a multi-frame fusion module. The multi-frame fusion module may be configured to fuse results of a plurality of decodings, to determine a final connection and pairing code.

The controller may be a nerve center and a command center of the electronic device 100. The controller may generate an operation control signal based on an instruction operation code and a time sequence signal, to complete control of instruction reading and instruction execution.

A storage may be further disposed in the processor 110, and is configured to store instructions and data. In some embodiments, the storage in the processor 110 is a cache memory. The storage may store instructions or data just used or cyclically used by the processor 110. If the processor 110 needs to use the instructions or the data again, the processor 110 may directly invoke the instructions or the data from the storage. This avoids repeated access, and reduces waiting time of the processor 110, so that system efficiency is improved.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The I2C interface is a two-way synchronization serial bus, and includes one serial data line (serial data line, SDA) and one serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to: perform audio communication, and sample, quantize, and code an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral component like the display 194 or the camera lens 193.

The GPIO interface may be configured by software. The GPIO interface may be configured as a control signal or a data signal. In some embodiments, the GPIO interface may be configured to connect the processor 110 to the camera lens 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device.

It may be understood that an interface connection relationship between the modules shown in this embodiment of this application is merely illustrative descriptions, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like.

In this embodiment of this application, the wireless communication module 160 may further include a connection authentication module. The connection authentication module may be configured to: verify a connection and pairing code, and establish a connection relationship with a peer device after the verification succeeds.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), or may be a display panel made of one of materials such as an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than 1.

In this embodiment of this application, the display 194 may be further configured to display a ring pattern (for example, a HarmonyOS ring) including encoding device connection information.

The electronic device 100 may implement a photographing function through the ISP, the camera lens 193, the video codec, the GPU, the display 194, the application processor, and the like.

The ISP is configured to process data fed back by the camera lens 193. The camera lens 193 is configured to capture a static image or a video. In this embodiment of this application, the camera lens 193 in an old device may be configured to scan a display interface of another electronic device, to obtain an image including the ring pattern.

The digital signal processor is configured to process a digital signal, and may process another digital signal in addition to a digital image signal.

The video codec is configured to compress or decompress a digital video.

The interface 120 for external memory may be configured to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The sensor module 180 may include the pressure sensor 180A, the gyro sensor 180B, the barometric pressure sensor 180C, the acceleration sensor 180E, the distance sensor 180F, the fingerprint sensor 180H, the touch sensor 180K, the bone conduction sensor 180M, and the like.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

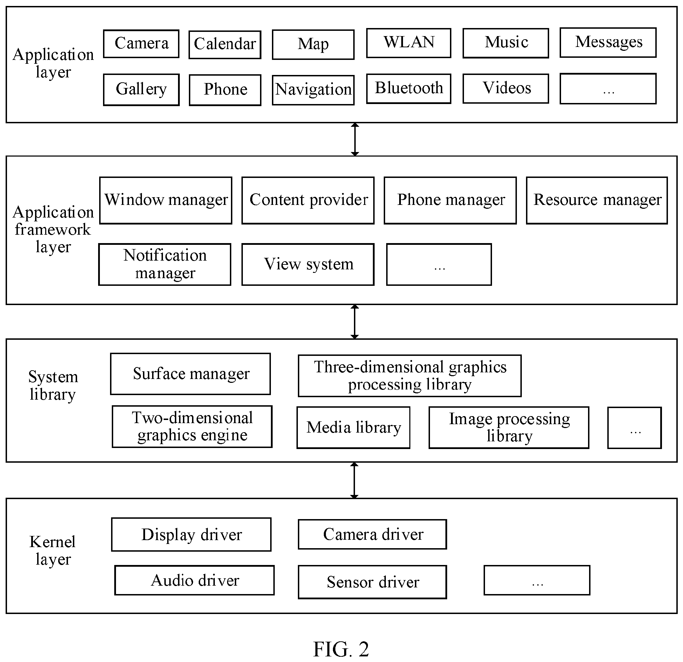

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an operating system is divided into four layers: an application layer, an application framework layer, a system library, and a kernel layer from top to bottom. The application layer may include a series of application packages.

As shown in FIG. 2, the application packages may include applications (applications, Apps) such as Camera, Gallery, Calendar, Phone, Map, Navigation, WLAN, Bluetooth, Music, Videos, Messages, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including a message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification type message. The notification manager may automatically disappear after a short stay without user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is prompted in the status bar, an announcement is given, the electronic device vibrates, or the indicator light blinks.

A core library includes two parts: One part is a performance function that a java language needs to invoke, and the other part is a core library.

The application layer and the application framework layer run in a virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, a static image file, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In some scenarios in which information transmission needs to be performed between devices, connection and pairing, account login, and the like between the devices is usually performed in a manner of scanning QR codes. For example, when a user performs device migration or data clone by using a first device, data needs to be transmitted from an old device to the first device, and the old device needs to scan a QR code displayed on the first device to perform connection and pairing. However, in the manner of scanning the QR code, an interaction path is long and interaction is inconvenient.

In view of this, embodiments of this application provide an information transmission method and an electronic device. In this technical solution, the first device may superimpose information that needs to be transmitted on a specially designed image. For example, when device connection needs to be performed, the first device may display the specially designed image, and a second device may scan the image to obtain device connection information in the image, for implementing a connection between the first device and the second device. When migration to the first device or data clone is performed, a path for device interaction can be shortened, and a sense of technology can be improved.

Before the technical solutions of this application are described, a part of technical terms that may be used in this application are first described as follows.

Region of interest (region of interest, ROI): In image processing, a region that needs to be processed is outlined by using a box, a circle, an ellipse, an irregular polygon, or the like from a processed image is referred to as a region of interest.

Hue, saturation, and value (Hue, saturation, and value, HSV) color space: The HSV color space is color space in which a color is represented by using a hue, saturation, and value, and is usually used for image processing. Hue H represents a color, saturation S represents an intensity of the color, and value V represents a brightness degree of the color.

Red, green, and blue (red, green, and blue, RGB) color space: The RGB color space is color space, with rich and extensive colors, that is generated by superimposing three basic colors, namely, red, green, and blue, in different intensities. The RGB color space is usually used in video, multimedia, and webpage design. A display of an electronic device uses the RGB color space as a display basis.

Moiré pattern: The moiré pattern is a high-frequency interference stripe that appears on a photosensitive element, and is a colorful high-frequency irregular stripe that appears on an image.

Image binarization: The image binarization is setting a grayscale value of a pixel in an image to 0 or 255. An entire binarized image presents a visual effect with only black and white.

The following describes a device migration process and a data clone process for the first device in this application with reference to several groups of graphical user interfaces (graphical user interfaces, GUIs). The following uses an example in which the first device is an electronic device 200 for description.

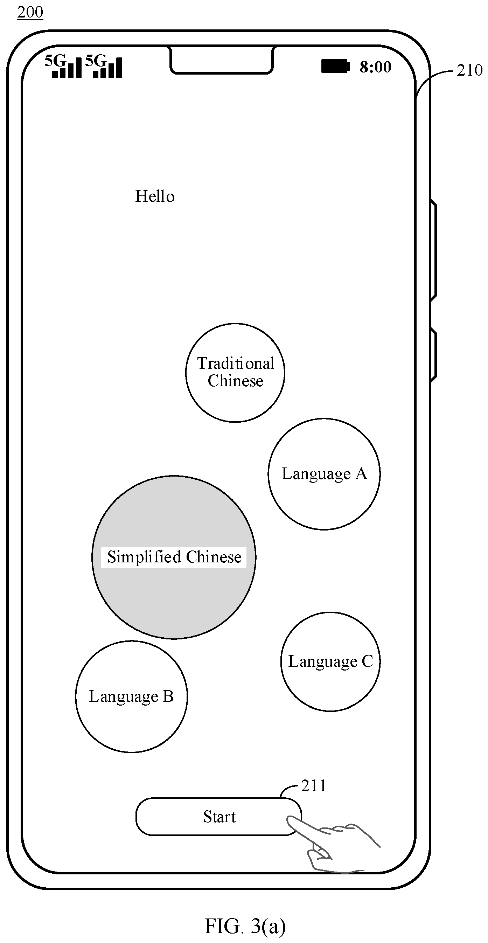

For example, FIG. 3(a) to FIG. 3(k) are a diagram of a group of GUIs according to an embodiment of this application. FIG. 3(a) to FIG. 3(k) show a process of startup experience of a user on an electronic device 200.

Refer to FIG. 3(a). A GUI is a startup display interface 210 of the electronic device 200. The display interface 210 may include a plurality of language options for the user to select. For example, the user selects simplified Chinese, or the electronic device 200 selects simplified Chinese by default.

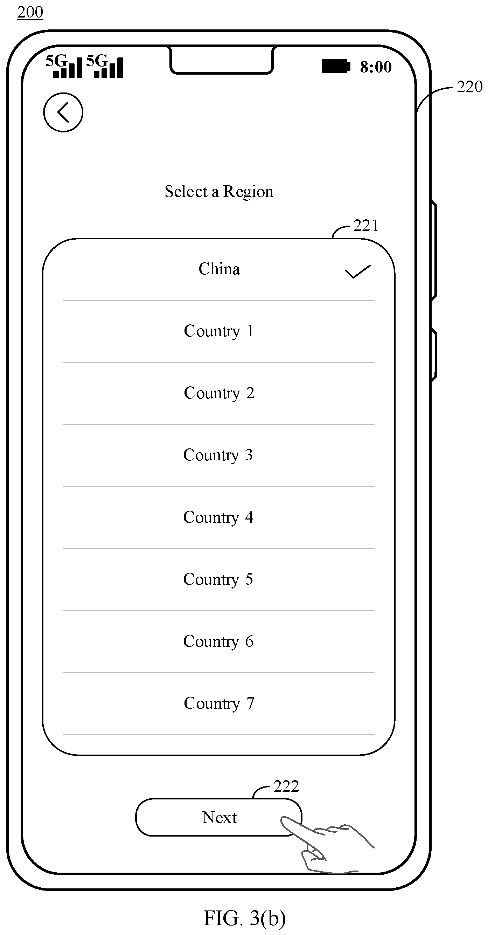

The display interface 210 may further include a start function button 211. After detecting an operation of tapping the start function button 211 by the user, the electronic device 200 may display a GUI shown in FIG. 3(b).

Refer to FIG. 3(b). The GUI is a display interface 220 that is of the electronic device 200 and that is for the user to select a region. The display interface 220 may include a card 221 and a continue function button 222. The card 221 may include a plurality of countries or regions. For example, the user may select China in the card 221.

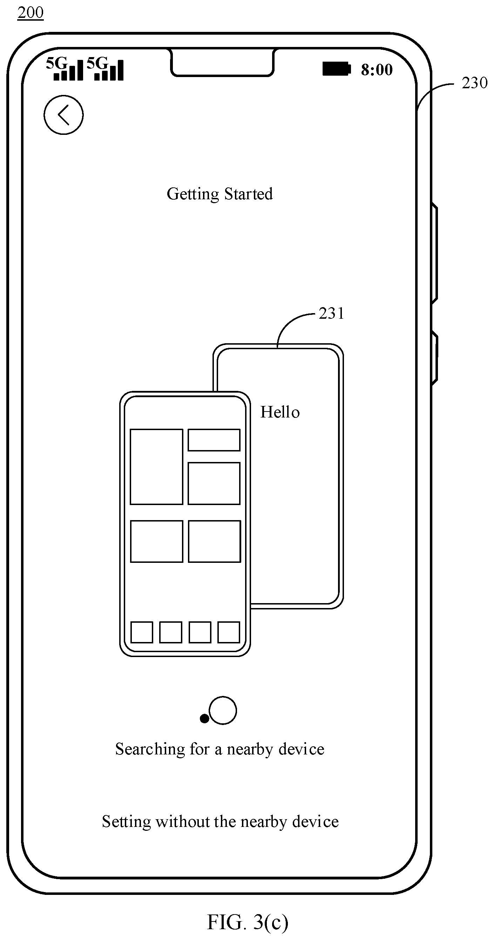

For example, after detecting an operation in which the user taps the continue function button 222, the electronic device 200 may display a GUI shown in FIG. 3(c).

Refer to FIG. 3(c). The GUI is a display interface 230 of the electronic device 200. The display interface 230 may include text content "Getting Started" and an icon 231 indicating the electronic device.

Before displaying the display interface 230, or when displaying the display interface 230, the electronic device 200 may broadcast a Bluetooth message to the outside, to search for a nearby second device. Text content "Searching for a nearby device" may be displayed on the display interface 230.

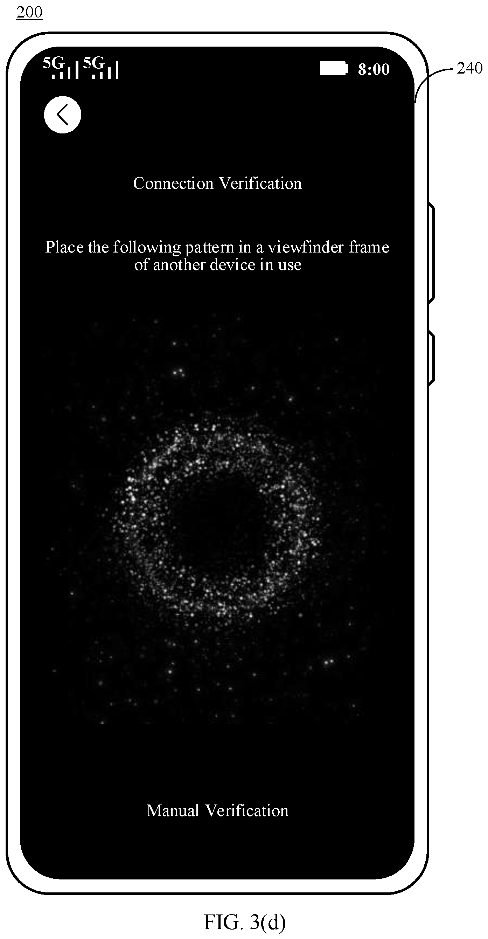

When the user makes the second device close to the electronic device 200, for example, when a distance between the second device and the electronic device 200 is less than or equal to a preset distance, the second device may display a setting card. After detecting that the user taps a setting function button in the setting card, the second device may send indication information to the electronic device 200 through Bluetooth, so that the electronic device 200 can display a GUI shown in FIG. 3(d).

Refer to FIG. 3(d). The GUI is a display interface 240 used by the electronic device 200 for connection verification. The display interface 240 may include a specially designed image, for example, a dynamic pattern. The specially designed image may be used for device connection, account login, data transmission, and smooth connection between the electronic device 200 and another electronic device, and may be further used by the electronic device 200 to perform projection, attend a conference, and the like.

For example, the dynamic pattern may be a ring, for example, a HarmonyOS ring, or may be in another shape, for example, a rectangle, a circle, or an ellipse. In this embodiment of this application, an example in which the dynamic pattern is a ring is used for description. The ring may include a plurality of white-blue particles, and the plurality of white-blue particles may implicitly include first information of the electronic device 200. The plurality of white-blue particles may be dynamic, or may be static.

For example, the first information may include device connection information, a verification code, account login information, projection information, and conference information. The device connection information may be a connection and pairing code, for example, the connection and pairing code has six digits: "147258". In another example, the connection and pairing code may further include an English letter, or the connection and pairing code may include 4 digits or 8 digits.

Alternatively, the device connection information may further include other information about the electronic device 200, for example, a device identifier, a model, and a media access control (media access control, MAC) address.

It should be understood that, in this embodiment of this application, an example in which the first information may include the device connection information and the device connection information is the connection and pairing code is used for description.

It should be understood that the electronic device 200 may hide the connection and pairing code in the ring pattern in a specific encoding manner.

In some examples, the electronic device 200 may divide the ring into a plurality of regions, and each region may represent one digit. For example, the electronic device 200 may evenly divide the ring pattern into six regions, and each region may include a different quantity of particles, so that different digits can be distinguished.

It may be understood that the electronic device 200 may alternatively evenly divide the ring pattern into nine regions, and the nine regions may include a part of same connection and pairing codes. In this redundant encoding manner, a decoding success rate of a peer electronic device can be improved. For example, when the peer electronic device scans the ring pattern, only a part of regions of the ring pattern can be successfully decoded due to interference such as light reflection and a moiré pattern. In this case, even if decoding the part of regions, the peer electronic device can obtain the complete connection and pairing code, for completing device connection.

Alternatively, the electronic device 200 may divide the ring pattern into more regions, for example, including three or more groups of connection and pairing codes. This is not limited in this embodiment of this application.

It should be understood that the electronic device 200 may alternatively perform encoding in another manner. For example, in each region, particles may be displayed in corresponding positions in a preset sequence, so that different digits can be distinguished.

After the electronic device 200 displays the ring pattern, the user may use the second device to scan the ring pattern, or the user may use the second device to shoot the display interface 240 of the electronic device 200, so that the second device can obtain the ring pattern and perform decoding to obtain the connection and pairing code in the ring pattern. The second device performs connection and pairing by using the connection and pairing code, to perform device connection. In this way, the second device only needs to shoot or scan the ring pattern displayed by the first device to complete device connection, so as to improve device connection efficiency and a sense of technology.

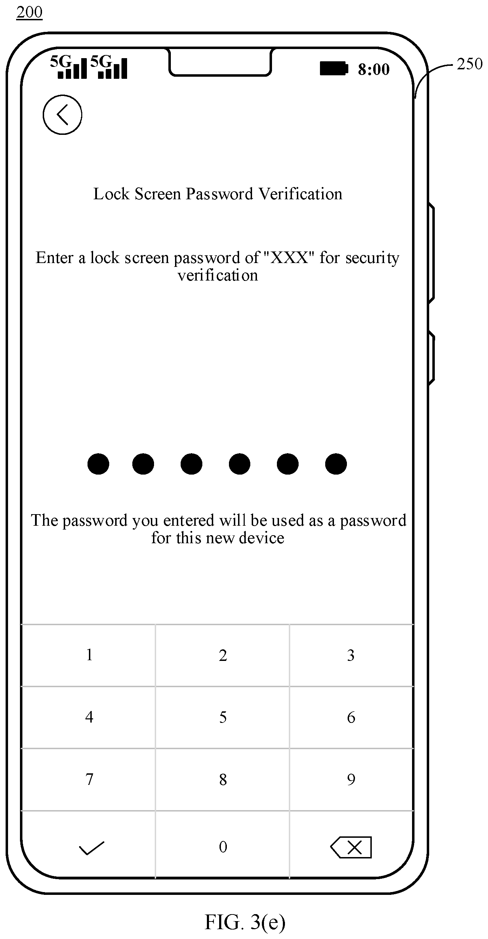

After the device connection, the electronic device 200 may display a GUI shown in FIG. 3(e).

Refer to FIG. 3(e). The GUI is a display interface 250 used by the electronic device 200 to verify a lock screen password of the second device. The display interface 250 may be used by the user to enter the lock screen password of the second device. In this way, security of the device connection can be improved. It should be understood that the lock screen password of the second device entered by the user is used as a lock screen password of the electronic device 200. In this way, the user does not need to separately set a lock screen password on the electronic device 200. This simplifies operations of the user, and improves efficiency of interaction between the user and the electronic device 200.

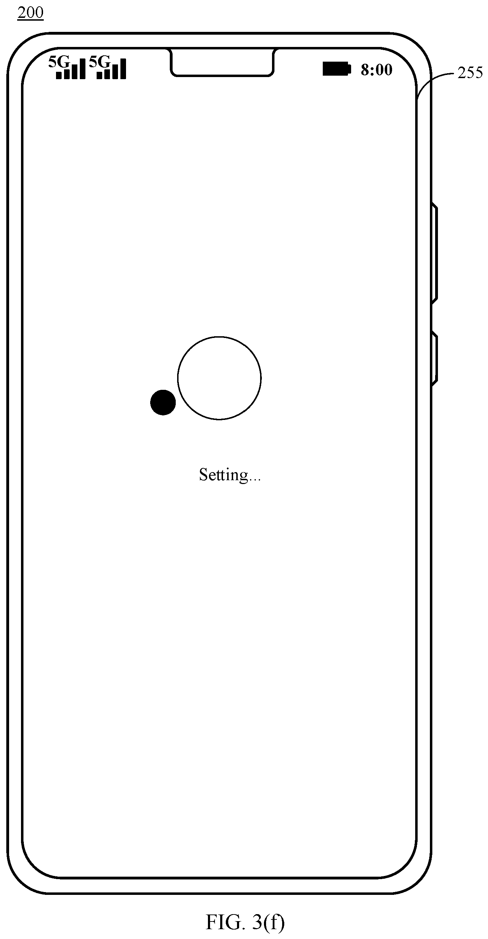

After detecting that the user enters the correct lock screen password, the electronic device 200 may display a GUI shown in FIG. 3(f).

It should be understood that FIG. 3(e) is an optional solution. In some examples, after the second device scans the ring pattern in the display interface 240 and performs device connection, the electronic device 200 may directly display the GUI shown in FIG. 3(f).

Refer to FIG. 3(f). The GUI is a display interface 255 of the electronic device 200. The display interface 255 may include text content "Setting..." and a loading icon.

It should be understood that, when the electronic device 200 displays the display interface 255, the second device may transmit a part of data to the electronic device 200, for example, Huawei account information, Wi-Fi information (such as a name and a password of a wireless local area network successfully accessed by the second device), a protocol statement, or privacy. In this way, fast migration of an account and a wireless network can be implemented, and the user does not need to separately perform setting on the electronic device 200, thereby simplifying the operation of the user.

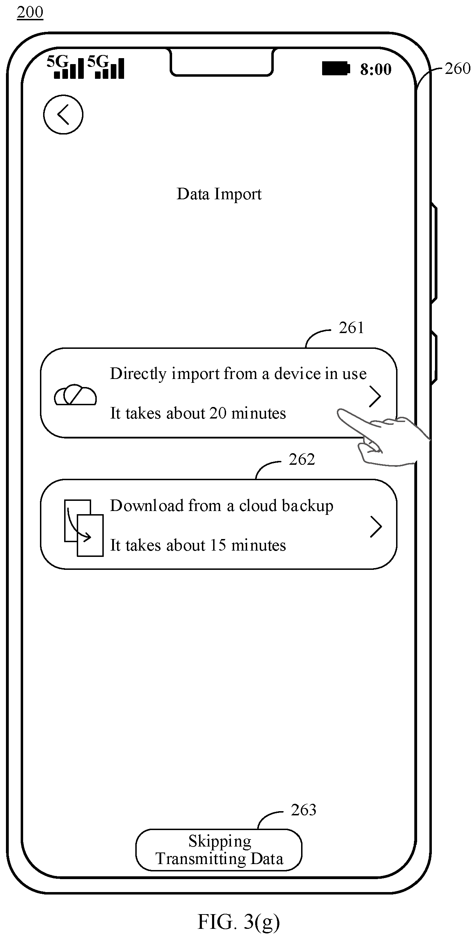

After detecting that the data transmission is completed, the electronic device 200 may display a GUI shown in FIG. 3(g).

Refer to FIG. 3(g). The GUI is a display interface 260 used by the electronic device 200 to import data. The display interface 260 may include a display card 261 and a display card 262. The display card 261 may include text content "Directly import from a device in use" and time needed for data import (for example, it takes about 20 minutes). The display card 262 may include text content "Download from a cloud backup" and time needed for data import (for example, it takes about 15 minutes).

The display interface 260 may further include a function button 263 for skipping transmitting data. When the user taps the function button 263, the electronic device 200 does not execute a data import procedure.

In another example, after detecting an operation in which the user taps the display card 262, the electronic device 200 may download data in the second device from a cloud server.

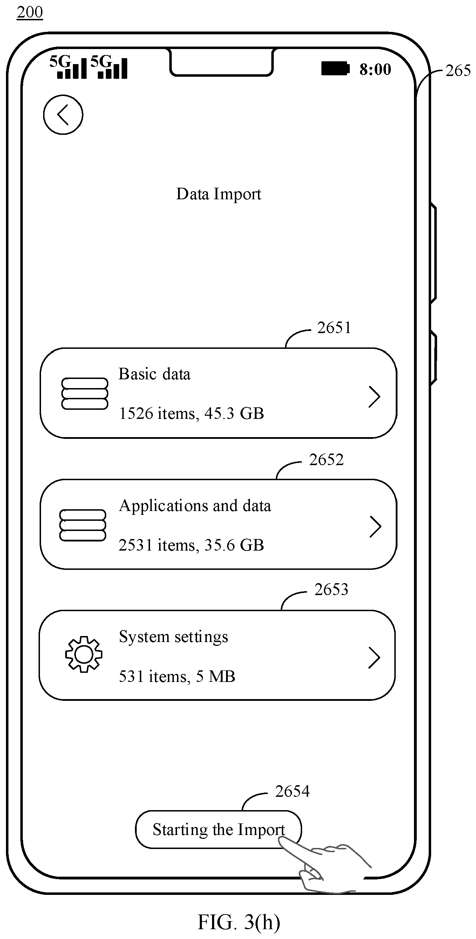

For example, after detecting an operation of tapping the display card 261 by the user, the electronic device 200 may display a GUI shown in FIG. 3(h).

Refer to FIG. 3(h). The GUI is a display interface 265 of options for data that needs to be imported for the electronic device 200. The display interface 265 may include a display card 2651 for basic data, a display card 2652 for applications and data, a display card 2653 for system settings, and a start import function button 2654.

The display card 2651 may include a quantity of items (for example, 1526 items) of the basic data in the second device and a size of occupied memory (for example, 45.3 GB). The display card 2652 may include a quantity of items (for example, 2531 items) of the applications and data in the second device and a size of occupied memory (for example, 35.6 GB). The display card 2653 may include a quantity of items (for example, 531 items) of data of the system settings and a size of occupied memory (for example, 5 MB).

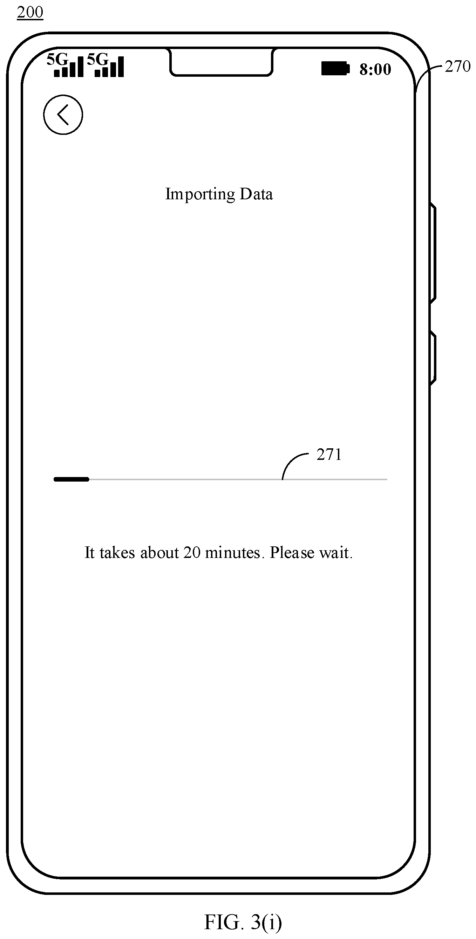

For example, after detecting an operation of tapping the start import function button 2654 by the user, the electronic device 200 may display a GUI shown in FIG. 3(i).

Refer to FIG. 3(i). The GUI is a display interface 270 used by the electronic device 200 to display a data import progress. The display interface 270 may include a progress bar 271 of the data import progress and remaining duration of data import.

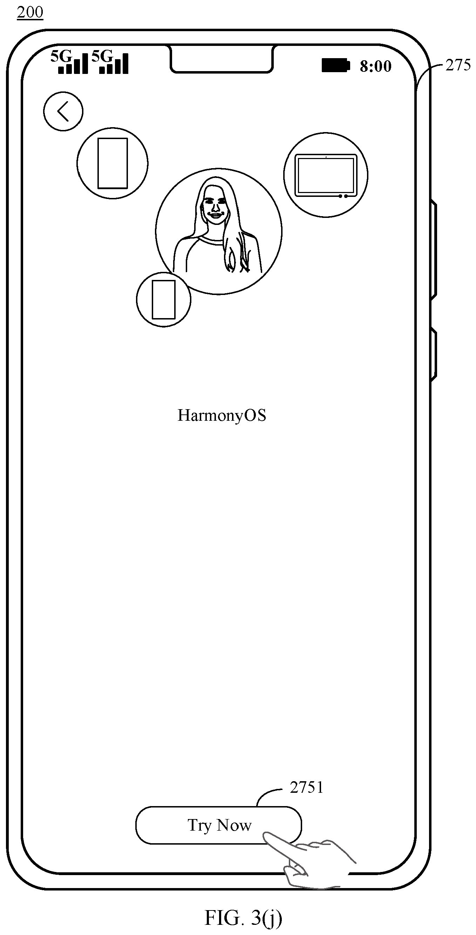

After detecting that the data import is completed, the electronic device 200 may display a GUI shown in FIG. 3(j).

Refer to FIG. 3(j). The GUI may be a display interface 275 of the electronic device. The display interface 275 may include icons of a plurality of electronic devices and a function button 2751 for trying now.

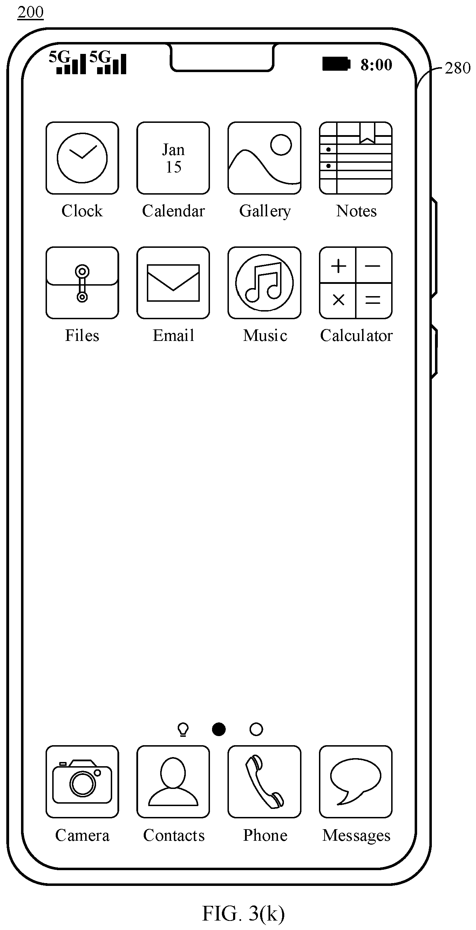

After detecting an operation of tapping the function button 2751 by the user, the electronic device 200 may display a GUI shown in FIG. 3(k).

It should be understood that, in another example, after detecting that the data import is completed, the electronic device 200 may further directly display the GUI shown in FIG. 3(k). This is not limited in this embodiment of this application.

Refer to FIG. 3(k). The GUI is a display interface 280 of the electronic device 200. The display interface 280 may be a display desktop of the electronic device 200, the display interface 280 may include a plurality of applications, and a layout of the applications on the display interface 280 is the same as a layout of a display desktop of the second device. In this way, after the user starts up the first device, data migration from the second device to the first device is completed.

According to this embodiment of this application, when using the first device, the user may hide the device connection information in the specially designed image (for example, the ring pattern), and the second device scans the specially designed image to obtain the device connection information, and establishes a connection relationship with the first device based on the device connection information. In this way, a device connection procedure can be simplified, and a sense of technology of the device connection can be improved. After the device connection, the first device can obtain the data in the second device through a convenient operation on the first device, to complete the data migration, so that the new device is quickly available, and startup experience of the user on the first device is improved.

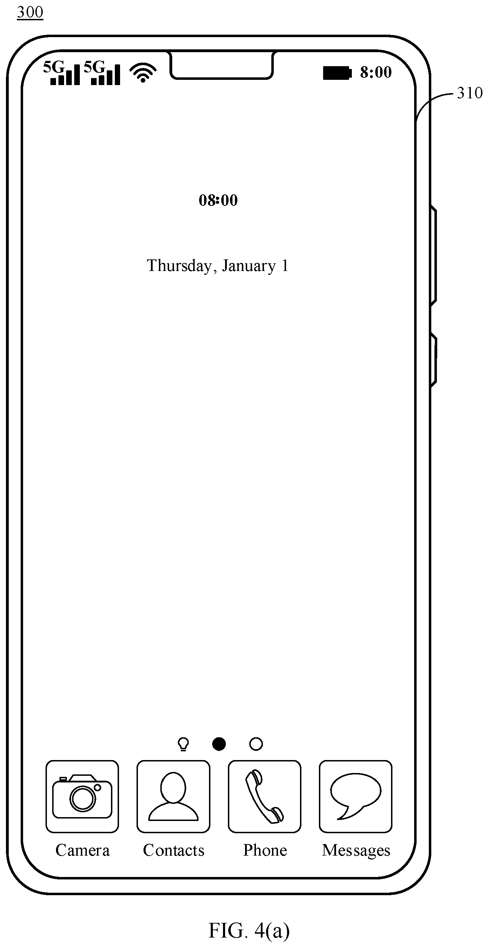

The foregoing describes, with reference to FIG. 3(a) to FIG. 3(k), a process in which the user performs an operation on the first device. The following describes, with reference to FIG. 4(a) to FIG. 4(g), a process in which the user performs an operation on the second device during startup experience.

For example, FIG. 4(a) to FIG. 4(g) are a diagram of a group of GUIs according to an embodiment of this application. FIG. 4(a) to FIG. 4(g) show a process in which a user performs an operation on a second device to transmit data to a first device.

Refer to FIG. 4(a). A GUI is a display desktop 310 of an electronic device 300. The display desktop 310 may include a plurality of applications in the electronic device 300.

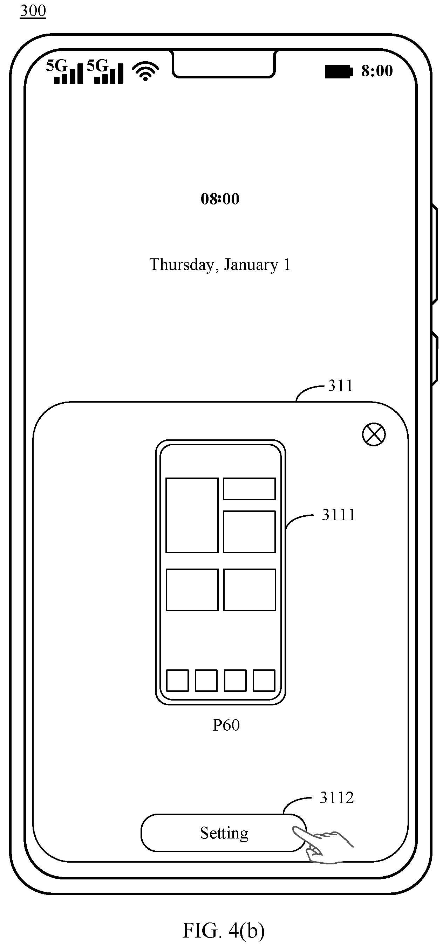

It should be understood that Bluetooth of the electronic device 300 is in a started state. After detecting a Bluetooth broadcast message of an electronic device 200, the electronic device 300 may display a GUI shown in FIG. 4(b).

Alternatively, after detecting a Bluetooth broadcast message of the first device (for example, the electronic device 200), the electronic device 300 may determine a first distance from the electronic device 200 in a Bluetooth ranging manner. When the first distance is less than or equal to a preset distance, the electronic device 300 may display a GUI shown in FIG. 4(b).

In another example, before displaying the GUI shown in FIG. 4(b), the electronic device 300 may be further in a lock screen display interface or a display interface of another application. This is not limited in this embodiment of this application.

Refer to FIG. 4(b). The electronic device 300 may display a display interface 311. The display interface 311 may include an indication icon 3111 of the first device, a model (for example, P60) of the first device, and a setting function button 3112. The display interface 311 may further include a close function button used to close the display interface 311.

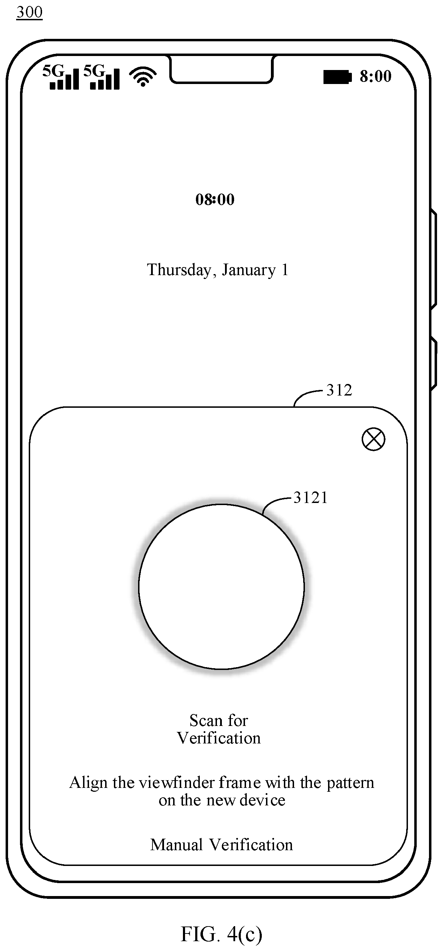

After detecting an operation of tapping the setting function button 3112 by the user, the electronic device 300 may display a GUI shown in FIG. 4(c).

As described above, after the operation of tapping the setting function button 3112 by the user, the electronic device 200 displays a display interface 240 that implicitly includes a connection and pairing code.

Refer to FIG. 4(c). The electronic device 300 may display a display interface 312. The display interface 312 may include a viewfinder frame 3121, and text content "Scan for Verification" and "Align the viewfinder frame with the pattern on the new device", and the like.

For example, the new device is the first device.

In another example, the display interface 312 may alternatively be a viewfinder display interface invoked from a camera lens or a viewfinder display interface invoked from a camera. This is not limited in this embodiment of this application.

It should be understood that the display interface 312 may be a part that covers the display interface 310, that is, the display interface 312 may be displayed in a semi-modal manner. A specific position of the display interface 312 is not limited in this embodiment of this application. The display interface 312 may be located at the bottom of the display interface 310, may be located at the top of the display interface 310, or may be located at a middle part of the display interface 310. The viewfinder frame 3121 may be located in a central position of the display interface 312, or may be located in another position of the display interface 312. This is not limited in this embodiment of this application.

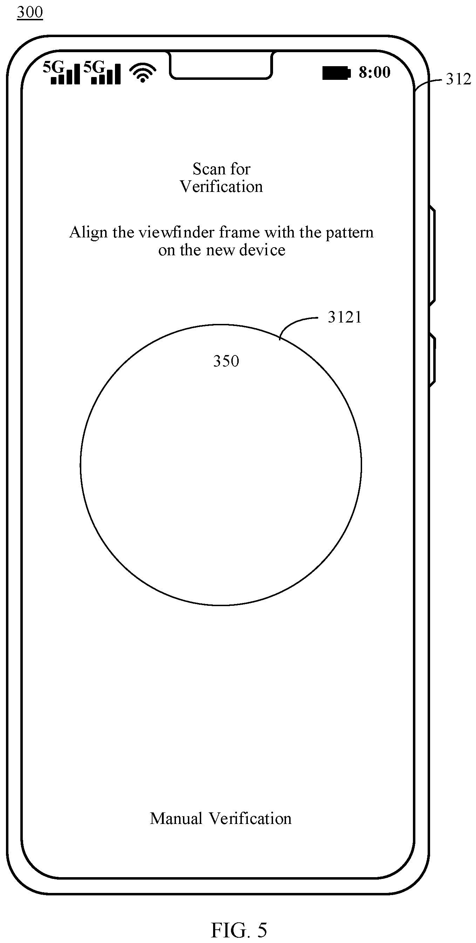

In another example, the display interface 312 may alternatively be displayed in full screen. For example, FIG. 4(c) may be replaced with FIG. 5. FIG. 5 is a diagram of full-screen display of an electronic device according to an embodiment of this application. Refer to FIG. 5. The electronic device 300 may display the display interface 312 in full screen. For the display interface 312, refer to the foregoing descriptions.

For example, the user may use the electronic device 300 to scan the display interface 240 of the electronic device 200, obtain a ring region in the display interface 240, perform decoding processing on the ring region to obtain the connection and pairing code included in the ring region, and establish a connection relationship with the electronic device 200 by using the connection and pairing code.

It should be further understood that when framing the ring region, the viewfinder frame 3121 may further display a breathing animation or a loading animation. This is not limited in this embodiment of this application.

For example, the breathing animation may be understood as that the viewfinder frame 3121 may gradually obtain the ring region from large to small when framing the ring region. In addition, the ring region obtained by the viewfinder frame 3121 may further display a dynamic change effect of a color stroke. It should be understood that the color stroke may be regular or irregular, and the color stroke may further rotate in a preset direction, or the color stroke may alternatively dynamically change from large to small or from small to large. Alternatively, when obtaining the ring region, the viewfinder frame 3121 may further display, in the obtained ring region, a dynamic icon indicating loaded content. Alternatively, when obtaining the ring region, the viewfinder frame 3121 may further display, in the obtained ring region, a dynamic change effect of a loading process.

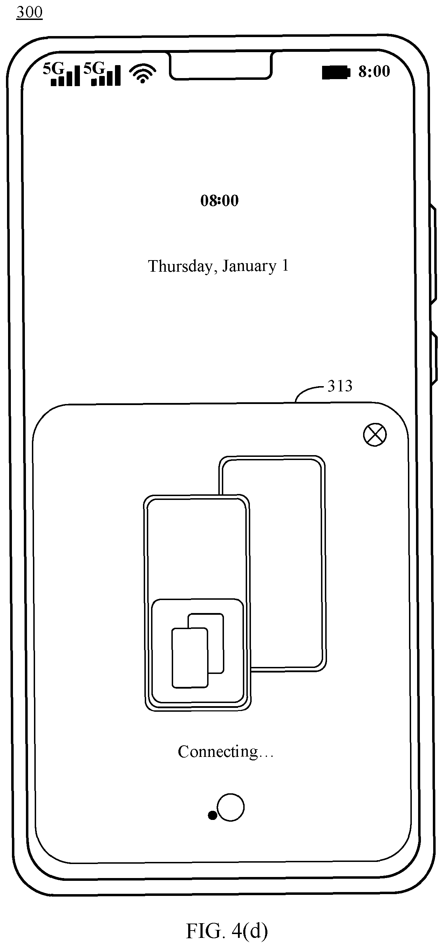

For example, after detecting that the ring region is scanned by the viewfinder frame, the electronic device 300 may display a GUI shown in FIG. 4(d).

It should be understood that the following describes, with reference to a specific embodiment, a process in which the electronic device performs decoding processing on the ring region to obtain the connection and pairing code. Details are not described herein.

It should be understood that the display interface 312 may further include a manual verification option. When detecting that the user taps the manual verification, the electronic device 300 displays a display interface for inputting a 6-digit number connection and pairing code. In this case, the electronic device 200 displays a display interface including the 6-digit number connection and pairing code. After the user enters the connection and pairing code, the electronic device 300 and the electronic device 200 may establish a connection relationship after mutual verification. In this case, the electronic device 300 may display the GUI shown in FIG. 4(d).

Refer to FIG. 4(d). The electronic device 300 may display a display interface 313. The display interface 313 may include an icon indicating that the two devices are being connected and text content "connecting".

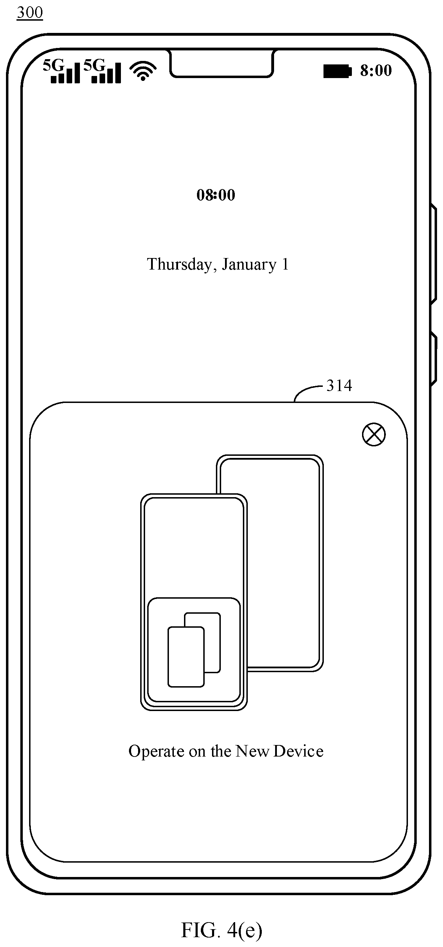

After the electronic device 300 is connected to the electronic device 200, the electronic device 300 may display a GUI shown in FIG. 4(e).

Refer to FIG. 4(e). The electronic device 300 may display a display interface 314. The display interface 314 may include an icon indicating that the two devices are connected and text content "Operate on the New Device".

For example, the new device is the first device.

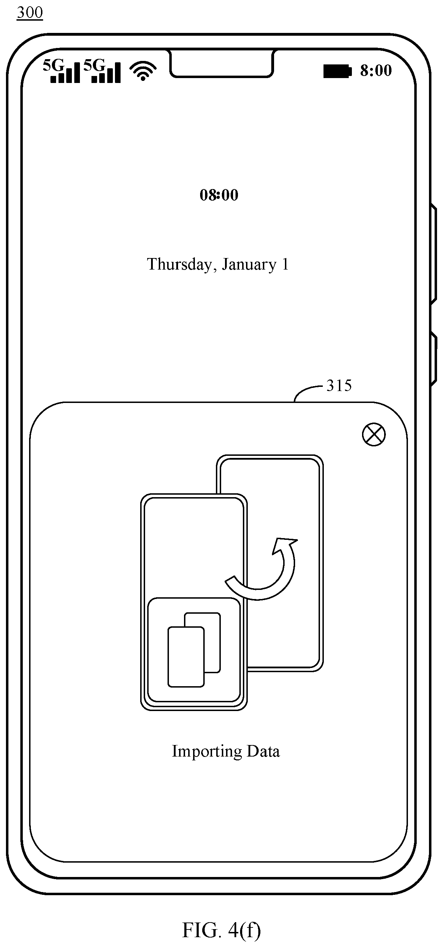

For example, in this case, the electronic device 200 may display a display interface 250, to improve security of device connection. After the user selects data on the electronic device 200 to perform a data operation, for example, after the electronic device 200 detects that the user taps a start import function button 2654, the electronic device 300 may display a GUI shown in FIG. 4(f).

Refer to FIG. 4(f). The electronic device 300 may display a display interface 315. The display interface 315 may display a guide for migrating data from one device to another device and text content "Importing Data".

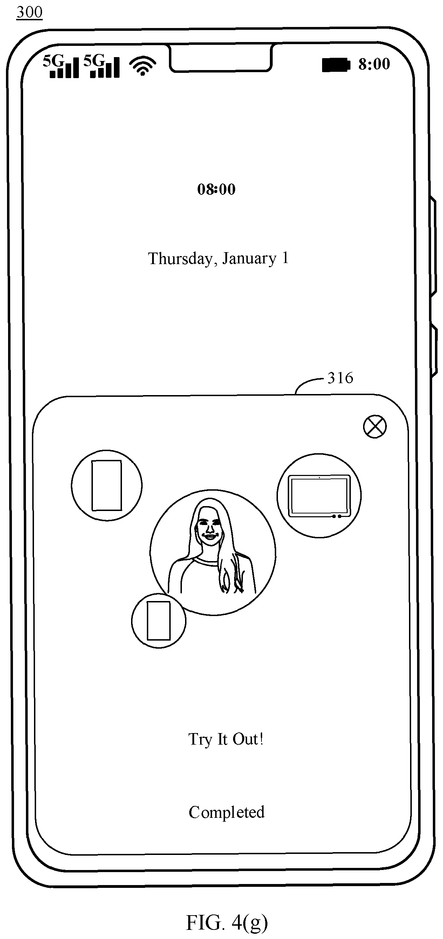

After detecting that data import is completed, the electronic device 300 may display a GUI shown in FIG. 4(g).

Refer to FIG. 4(g). The electronic device 300 may display a display interface 316. The display interface 316 is used to prompt the user that the data import is completed.

According to this embodiment of this application, when using the first device, the user may use the second device to scan the ring pattern displayed on the first device, to obtain the connection and pairing code in the ring pattern, and establish a connection relationship with the first device based on the connection and pairing code. Then, when the second device transmits data to the first device, the second device may further display an operation guide and a data transmission progress, so that the user obtains a data transmission status.

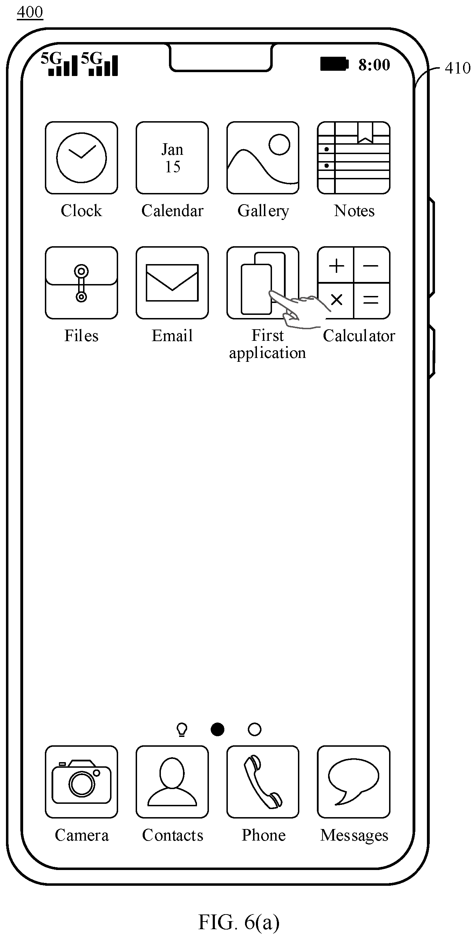

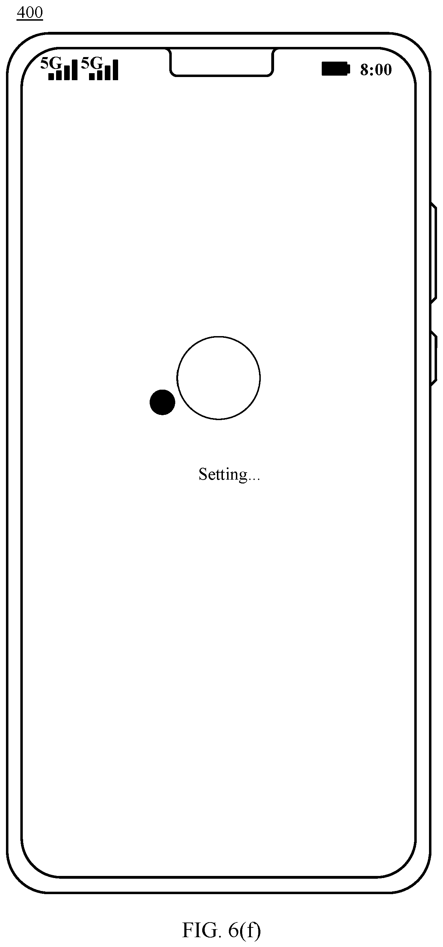

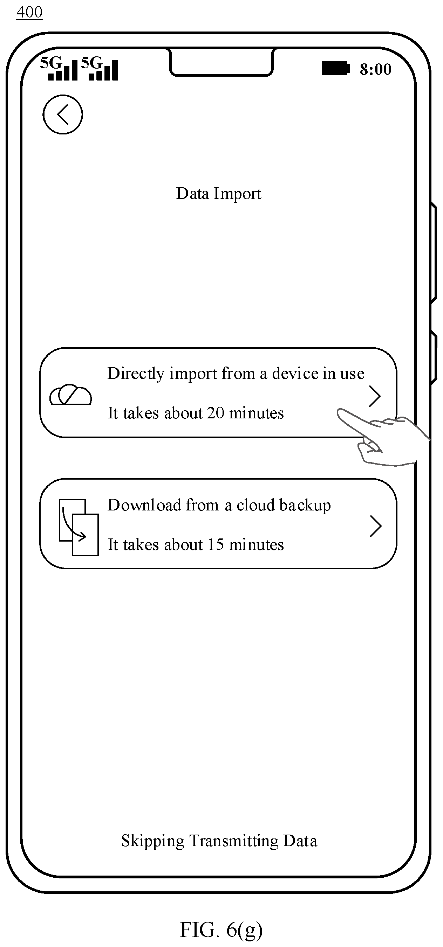

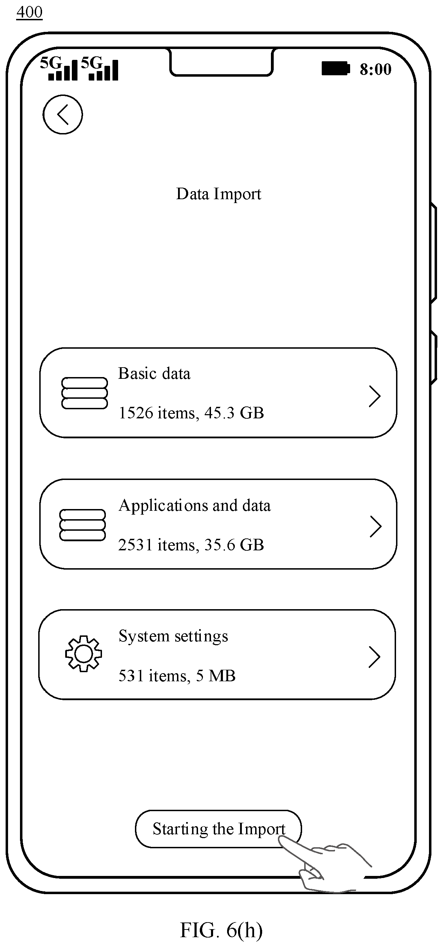

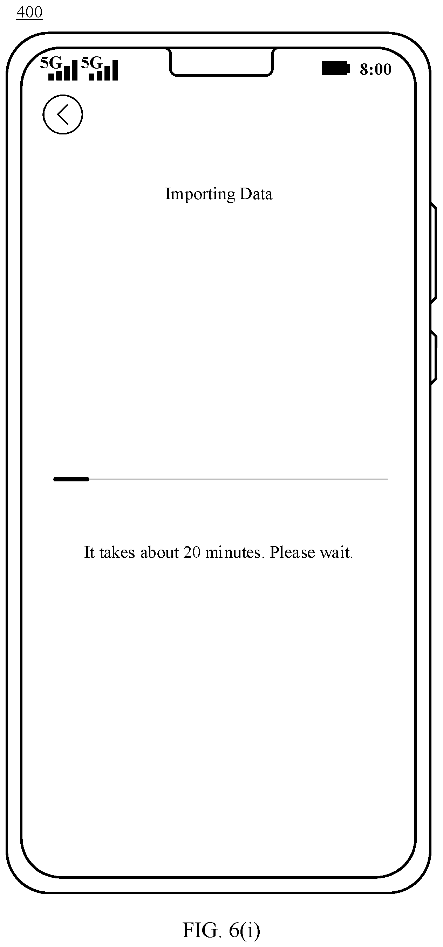

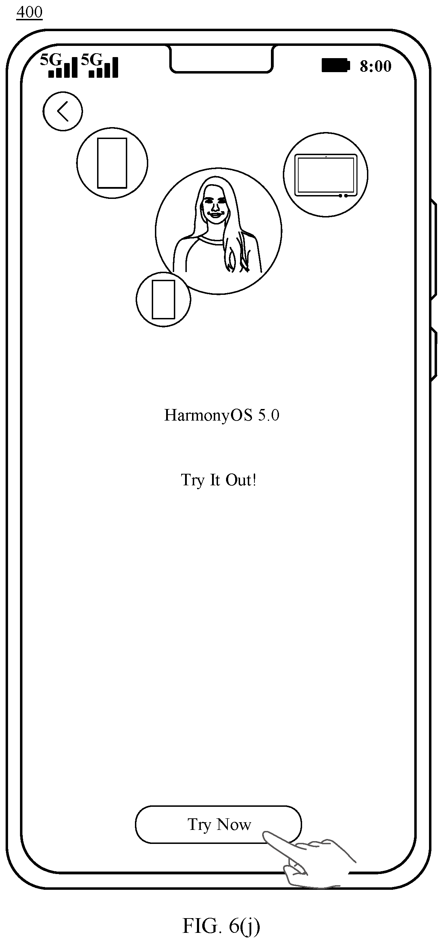

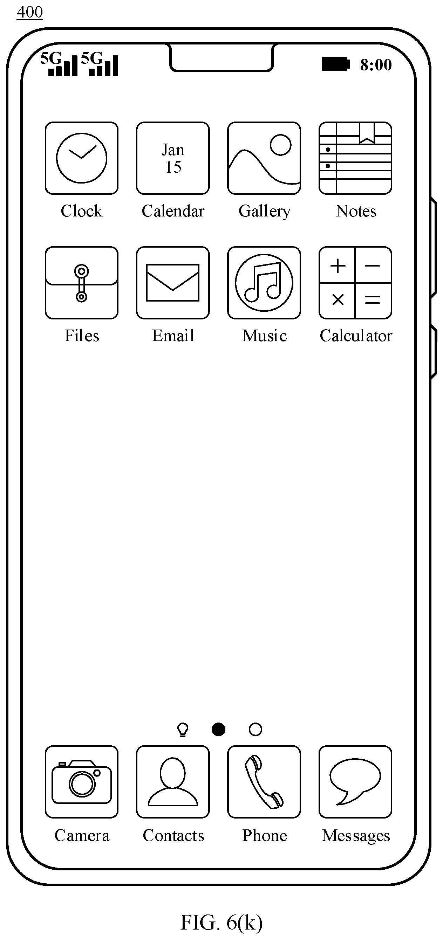

In some cases, when an electronic device that is not started up for a first time performs data clone, the second device may also establish a device connection in a manner of scanning a ring pattern. The following describes the technical solution with reference to FIG. 6(a) to FIG. 6(k).

For example, FIG. 6(a) to FIG. 6(k) are a diagram of another group of GUIs according to an embodiment of this application. FIG. 6(a) to FIG. 6(k) show a process in which a user performs an operation on an electronic device 400 to perform data clone.

Refer to FIG. 6(a). A GUI may be a display desktop 410 of the electronic device 400. The display desktop 410 may include a plurality of applications. For example, the plurality of applications may include a first application, and the first application may be an application used for data clone, for example, mobile phone clone.

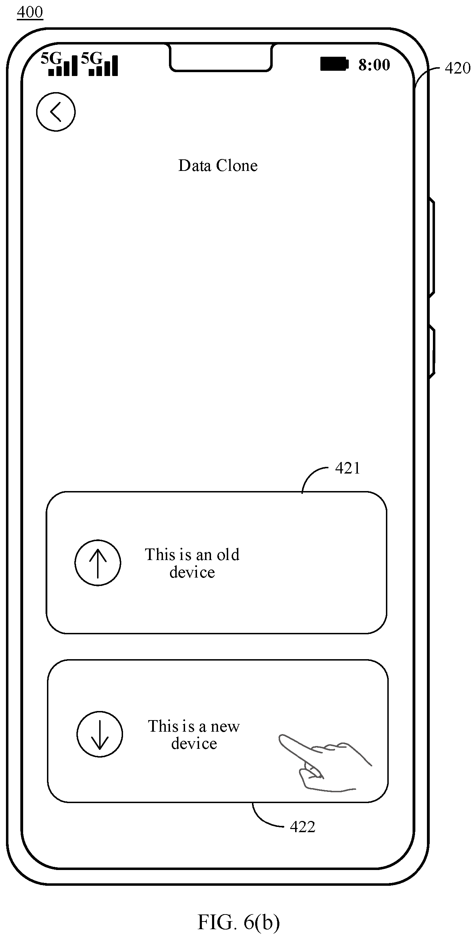

For example, after detecting an operation of tapping the first application by the user, the electronic device 400 may display a GUI shown in FIG. 6(b).

Refer to FIG. 6(b). The GUI is a display interface 420 of the first application. The display interface 420 may include a display card 421 and a display card 422. The display card 421 may include text content "this is a second device" and an icon. The display card 422 may include text content "this is a first device" and an icon.

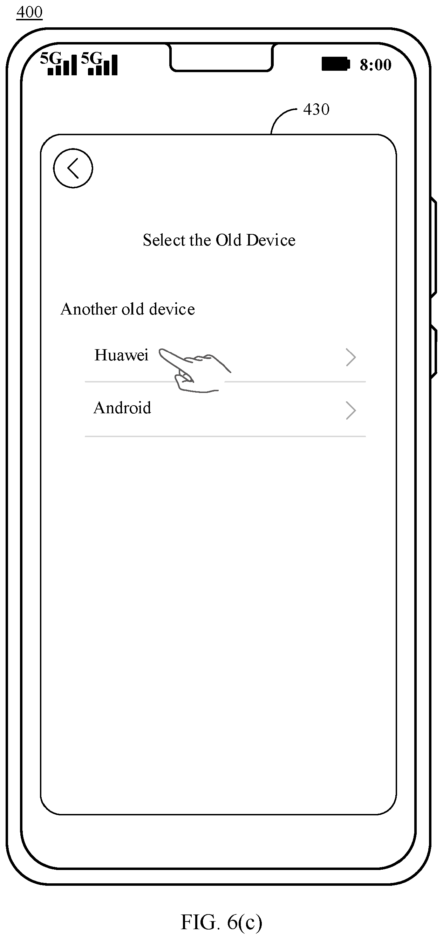

After detecting an operation of tapping the display card 422 by the user, the electronic device 400 may display a GUI shown in FIG. 6(c).

Refer to FIG. 6(c). The electronic device 400 may display a display interface 430. The display interface 430 may include a plurality of types of second devices, for example, Huawei and Android. The display interface 430 may be used by the user to select the type of the second device.

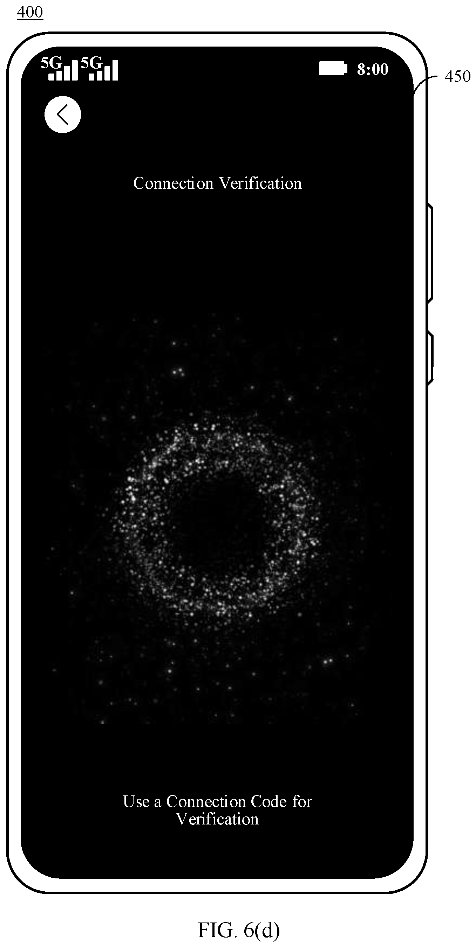

For example, after detecting an operation of selecting the type of "Huawei" by the user, the electronic device 400 may display a GUI shown in FIG. 6(d).

It may be understood that the electronic device 400 may broadcast a Bluetooth message. When the second device (for example, an electronic device 300) detects the Bluetooth message, and a distance between the electronic device 300 and the electronic device 400 is less than or equal to a preset distance, the electronic device 300 may display a display interface 311. After an operation of taping a setting function button 3112 by the user, the electronic device 300 may send indication information to the electronic device 400. In this case, the electronic device 400 may display the GUI shown in FIG. 6(d).

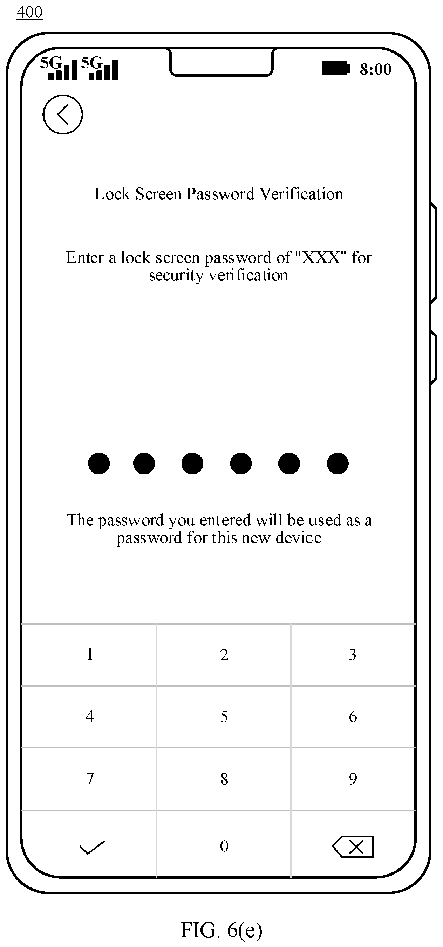

In another example, after detecting an operation of selecting the type of "Huawei" by the user, the electronic device 400 may alternatively directly display a GUI shown in FIG. 6(e).

Refer to FIG. 6(d). The GUI is a display interface 450 used by the electronic device 400 for connection verification. The display interface 450 may include a specially designed image, for example, a dynamic pattern. The specially designed image may be used by the electronic device 400 to perform device connection with another electronic device.

It should be understood that, for details of FIG. 6(d), refer to related descriptions in FIG. 3(d).

It should be further understood that, for FIG. 6(e) to FIG. 6(k), refer to related descriptions of FIG. 3(e) to FIG. 3(k). For brevity, details are not described herein again.

According to this embodiment of this application, during data clone, the first device may hide device connection information in the specially designed image (for example, a ring pattern), and the second device scans the specially designed image to obtain the device connection information, and establishes a connection relationship with the first device based on the device connection information. In this way, a device connection procedure can be simplified, and a sense of technology of device connection can be improved. After the device connection, the first device may obtain data in the second device through a convenient operation on the first device, to complete data migration.

In another example, a device A may further encode account information in a specially designed image (for example, a ring pattern). When account login needs to be performed, the device A may display the ring pattern, and a device B may scan and parse the ring pattern displayed by the device A, to implement an account login function. It should be understood that the foregoing solutions are also applicable to scenarios such as device connection establishment, data transmission, account login, projection, smooth connection, and video conference attendance.

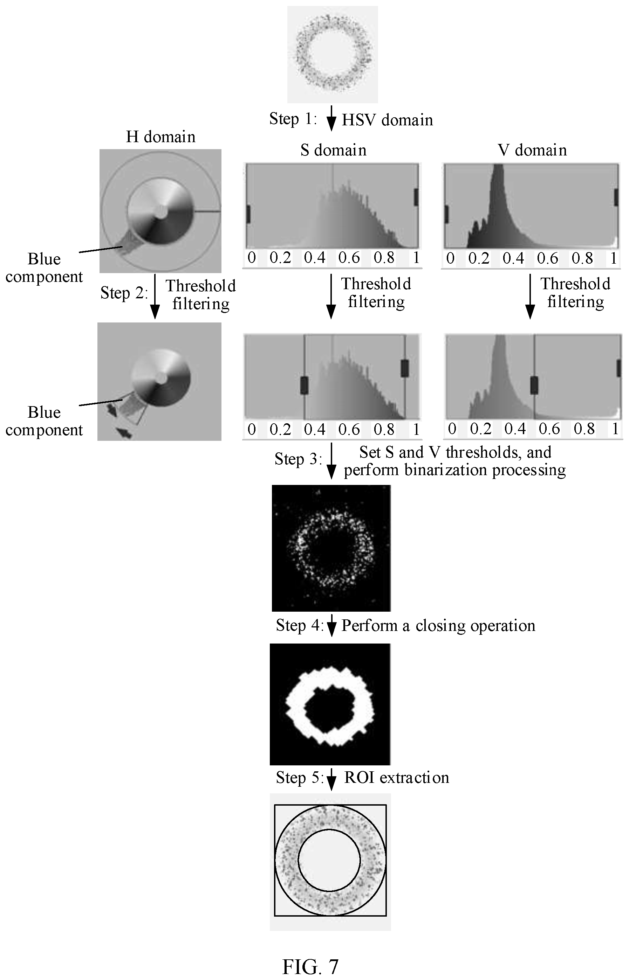

The foregoing describes, with reference to the GUIs in FIG. 3(a) to FIG. 3(k) to FIG. 6(a) to FIG. 6(k), a process in which a device is quickly available and a process of data clone. The following describes, with reference to FIG. 7 to FIG. 11, a process in which an electronic device obtains a ring pattern and performs decoding according to an embodiment of this application.

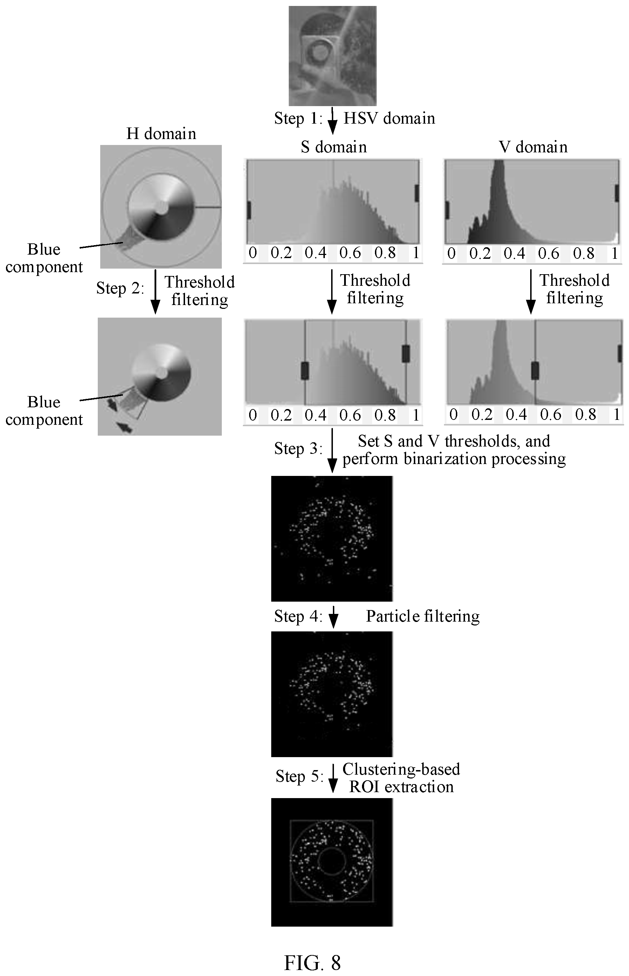

It should be understood that, in this embodiment of this application, an example in which a first device encodes device connection information in the ring pattern is used for description. First, a process in which a second device obtains the ring pattern is described with reference to FIG. 7 and FIG. 8.

For example, FIG. 7 shows a process of obtaining a ring pattern according to an embodiment of this application.

When performing device connection, a first device encodes device connection information in the ring pattern, and displays a display interface including the ring pattern. After a second device scans, by using a camera lens, the display interface that is of the first device and that includes the ring pattern, the second device first identifies the ring pattern from an image. As shown in FIG. 7, the process in which the second device obtains the ring pattern may include step 1 to step 5.

Step 1: The second device converts an RGB image including the ring pattern into an HSV image.

For example, the image that is obtained by the second device and that includes the ring pattern is generally the RGB image, and the second device converts the RGB into the HSV image. In the HSV image, there are corresponding numerical distributions in an H domain, an S domain, and a V domain.

It should be understood that the second device may convert the RGB image including the ring pattern into the HSV image by using the following formula:

$$h = \begin{cases} 0^0, \max = \min \\ 60^0 \times \dfrac{g-b}{\max - \min} + 0^0, \max = r, g \geq b \\ 60^0 \times \dfrac{g-b}{\max - \min} + 360^0, \max = r, g < b \\ 60^0 \times \dfrac{b-r}{\max - \min} + 120^0, \max = g \\ 60^0 \times \dfrac{r-g}{\max - \min} + 240^0, \max = b \end{cases}$$

$$s = \begin{cases} 0, \max = 0 \\ \dfrac{\max - \min}{\max} = 1 - \dfrac{\min}{\max}, \text{another value} \end{cases}$$

$$v = \max$$

(r, g, b) respectively represents red, green, and blue coordinates of a color, and values of (r, g, b) are real numbers between 0 and 1. max is a maximum value in r, g, and b. min is a minimum value in r, g, and b.

Step 2: The second device separately performs threshold filtering in the H domain, the S domain, and the V domain.

For example, the H domain may be measured by using an angle, and a value range is 0 degrees to 360 degrees. In this embodiment of this application, the second device may reserve a component whose angle is greater than a first angle and less than or equal to a second angle in the H domain of the image, and filter out a remaining angle.

In some examples, if the ring pattern is mainly blue, the first angle may be 210 degrees, and the second angle may be 270 degrees. In this filtering manner, the second device can reserve a blue component in the image and filter out a component of another color. In this way, even if light reflection exists in the image that is obtained by the second device and that includes the ring pattern, a part having light reflection may be filtered out in this manner, to reduce interference caused by the light reflection.

In some other examples, if the ring pattern is mainly green, the first angle may be 90 degrees, and the second angle may be 150 degrees. In this filtering manner, the second device can reserve a green component in the image and filter out a component of another color.

It should be understood that the first angle and the second angle may be set by a developer based on experience, or may be determined by the second device based on a value distribution of the H domain. A specific manner of obtaining the first angle and the second angle is not limited in this embodiment of this application.

Similarly, the S domain represents saturation, represents a degree to which a color is close to a spectral color, and may be represented by 0 to 1 (or 100%). 0 represents lowest saturation (pure white), and 1 represents highest saturation and a color closest to the spectral color.

The V domain represents value, represents a brightness degree of a color, and may be represented by 0 to 1 (or 100%). 0 represents lowest value (pure black), and 1 represents highest value and a brightest color.

An S threshold and a V threshold are set to filter out a dark color in the image.

For example, the second device may reserve a component whose value is greater than a first saturation threshold and less than or equal to a second saturation threshold in the S domain, and reserve a component whose value is greater than a first value threshold in the V domain.

It should be understood that specific values of the first saturation threshold, the second saturation threshold, and the first value threshold are not limited in this embodiment of this application. For example, the first saturation threshold is 0.3 or 0.35, the second saturation threshold is 0.9 or 0.85, and the first value threshold is 0.5 or 0.6.

In another example, in step 2, the second device may further separately perform threshold filtering in the H domain, and does not perform threshold filtering in the S domain and the V domain.

Step 3: The second device performs binarization processing on the image.

After performing threshold filtering in step 2, the second device may perform binarization processing on the image. For example, the second device may set grayscale thresholds in the S domain and the V domain. A value of a part whose grayscale value is greater than the grayscale threshold is 1 (or a grayscale value is 255), that is, white. A value of a part whose grayscale value is less than or equal to the threshold is 0 (or a grayscale value is 0), that is, black.

For example, in the S domain, the second device may set a first grayscale threshold. A value of a part whose grayscale value is greater than the first grayscale threshold is 1, representing white, and a value of a part whose grayscale value is less than or equal to the first grayscale threshold is 0, representing black.

In the V domain, the second device may set a second grayscale threshold. A value of a part whose grayscale value is greater than the second grayscale threshold is 1, representing white, and a value of a part whose grayscale value is less than or equal to the second grayscale threshold is 0, representing black.

In this way, the second device may obtain a binarized image A, and the image A includes only black or white.

Step 4: The second device performs a closing operation on the binarized image A.

For example, the second device may first expand and then corrode the image A, so that discrete points form a connected component. Still refer to FIG. 7. After the closing operation is performed on the image A, discrete white points in the image A form a connected domain.

For example, expanding the image A may be understood as, for each pixel X in the image A, placing the pixel X at a center of a first rectangle (with the width of m pixels and the height of n pixels), traversing all other pixels covered by the first rectangle, and modifying a value of the pixel X to a maximum value in pixels covered by the first rectangle.

Corroding the image A may be understood as, for each pixel X in the image A, placing the pixel X at the center of the first rectangle (with the width of m pixels and the height of n pixels), traversing all the other pixels covered by the first rectangle, and modifying the value of the pixel X to a minimum value in the pixels covered by the first rectangle.

In another example, the second device may alternatively perform a closing operation on the image A in another manner. This is not limited in this embodiment of this application.

Step 5: The second device extracts a region of interest ROI, where the ROI is a region in which the ring pattern is located.

For example, the second device may perform elliptic fitting on the connected domain, to extract the ROI including the ring pattern.

It should be understood that a fitting manner is not limited in this embodiment of this application. In another example, the second device may alternatively use rectangle fitting or the like.

According to this embodiment of this application, the second device can successfully obtain the ring pattern displayed on the first device.

In some cases, because light reflection is severe or the ring pattern is partially blocked, when the second device performs a closing operation on the binarized image, the discrete points cannot form the connected component. Consequently, the second device may fail to identify a complete ring pattern, and further, the second device cannot successfully perform decoding, leading to a device connection failure. Therefore, in this case, in embodiments of this application, the complete ring pattern may be obtained in a particle clustering manner. The following describes the technical solution with reference to FIG. 8.

For example, FIG. 8 shows another process of obtaining a ring pattern according to an embodiment of this application. As shown in FIG. 8, the process in which an electronic device obtains the ring pattern may include step 1 to step 5.

Step 1: A second device converts an image including the ring pattern into an HSV image.

Step 2: The second device separately performs threshold filtering in an H domain, an S domain, and a V domain.

Step 3: The second device performs binarization processing on the image.

It should be understood that, for step 1 to step 3, refer to related descriptions in step 1 to step 3 in FIG. 7. For brevity, details are not described herein again.

Step 4: The second device performs particle filtering on a binarized image A.

The second device obtains the image A after performing binarization on the image. The image A includes two colors: black and white. White particles are discretely distributed in the image A. There may be some interference points in these particles. For example, some particles with a large area may be interference points. Therefore, the second device may perform filtering on particles included in the image A.

For example, the second device may set an area threshold of the particle, reserve a particle whose area is less than or equal to a first threshold m1, or reserve a particle whose area is less than or equal to a first threshold m1 and greater than a second threshold m2, and filter out a remaining particle.

In this way, the second device can filter out a part of interference particles in the image, to help improve a possibility of subsequent decoding.

It should be understood that step 4 is an optional step.

In another example, before step 4, the second device may further first perform edge detection on the binarized image A, and extract a contour in the image A, to determine a region in which a display of a first device is located in the image A.

Step 5: The second device extracts an ROI, where the ROI is a region in which the ring pattern is located.

For example, the second device may perform particle clustering by using a ring clustering algorithm, to obtain a plurality of rings. Then, the second device may select, from the plurality of rings, a ring whose aspect ratio is approximately equal to 1 and whose ratio of a center of the ring to a particle density of a ring region is greater than a third density threshold, and use the ring as the extracted ROI.

Alternatively, the second device may select, from the plurality of rings, a ring whose aspect ratio is approximately equal to 1 and whose particle density of a ring region is greater than a fourth density threshold, and use the ring as the extracted ROI.

It should be understood that the ring clustering algorithm may be, for example, a spectral clustering algorithm or a Euclidean distance-based clustering algorithm like a K-means algorithm.

Still refer to FIG. 8. The ROI finally extracted by the second device may include the complete ring pattern. In another example, if the ring pattern is partially blocked, the ROI finally obtained by the second device may include a part of the ring pattern, for example, 60% or 75% of the entire ring pattern. However, because partial redundancy exists during encoding the first device, although the second device obtaining a part of the entire ring pattern, decoding may still succeed subsequently, for obtaining device connection information.

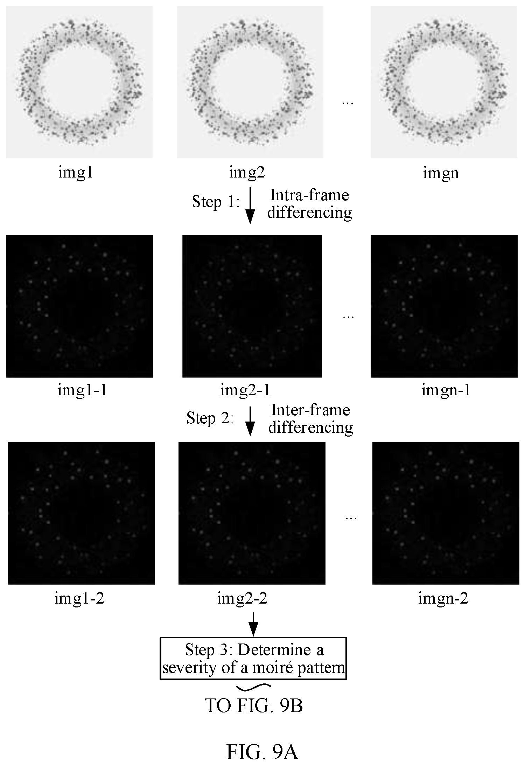

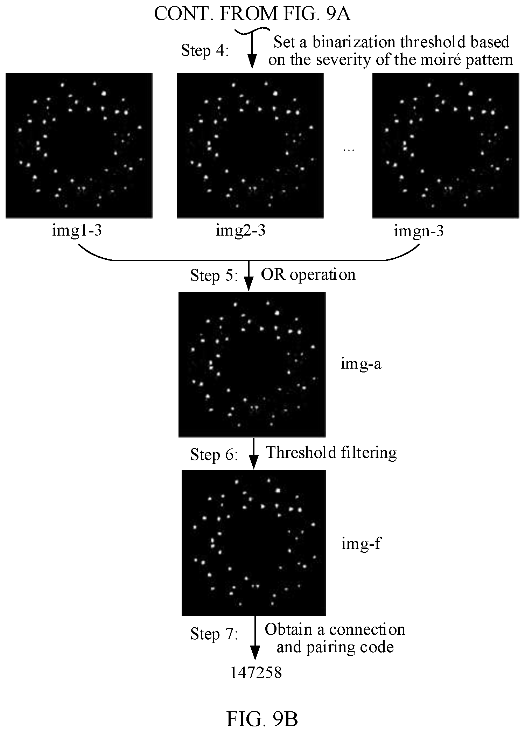

After successfully extracting the ROI including the ring pattern, the second device may perform processing on the ROI to obtain the device connection information encoded in the ROI. The following describes the technical solution with reference to FIG. 9A and FIG. 9B.

For example, FIG. 9A and FIG. 9B are a diagram of obtaining a connection and pairing code according to an embodiment of this application. As shown in FIG. 9A and FIG. 9B, a process in which a second device obtains device connection information may include step 1 to step 7.

The second device may perform ROI extraction on a plurality of consecutive or inconsecutive frames of images in the manner shown in FIG. 8, to separately obtain a plurality of frames of images including a ring pattern.

Step 1: The second device separately performs intra-frame differential processing on img1 and img2 to imgn, to obtain grayscale images img1-1, img2-1, and imgn-1 respectively. n is greater than or equal to 2.

An example in which the second device performs intra-frame differential processing on img1 is used to describe an intra-frame differential process.

img1 has RGB three channels. The second device first performs RGB three-channel decomposition on img1, to separately obtain an R-channel image, a G-channel image, and a B-channel image, and corresponding values are respectively denoted as R1, G1, and B1.

In an example, the second device may perform intra-frame differential processing by using a formula img1-1=|(B1-R1)+(B1-G1)|, to obtain the grayscale image img1-1.

In another example, the second device may perform intra-frame differential processing by using a formula img1-1=|(G1-R1)+(G1-B1)|, to obtain the grayscale image img1-1.

Similarly, the second device separately performs intra-frame differential processing on img2 to imgn, to obtain the grayscale images img2-1 to imgn-1 respectively.

In this way, intra-frame differential processing is separately performed on img1 and img2 to imgn, so that feature particles included in the obtained grayscale images are more obvious. This helps the second device obtain a connection and pairing code encoded in the grayscale images.

Step 2: The second device separately performs inter-frame differential processing on img1-1 and img2-1 to imgn-1, to obtain differential images img1-2 and img2-2 to imgn-2.

For example, the second device may separately perform pairwise differential processing on img1-1 and img2-1 to imgn-1.

For example, an example in which n is 3 is used for description. The second device may perform a differential operation on img1-1 and img2-1 to obtain the image img1-2. The second device may perform a differential operation on img2-1 and img3-1 to obtain the image img2-2. The second device may perform a differential operation on img3-1 and img1-1 to obtain an image img3-2.

It should be understood that the differential operation may be understood as a process in which grayscale values of pixels corresponding to two frames of images are subtracted and an absolute value is obtained.

It should be understood that a specific execution sequence of step 1 and step 2 is not limited in this embodiment of this application. In some examples, the second device may alternatively first perform step 2, and then perform step 1.

It should be understood that, between step 1 and step 2, the second device may further perform multi-frame alignment processing on the grayscale images img1-1 and img2-1 to imgn-1.

For example, an example in which n is 3 is used for description. The second device may perform alignment processing on img1-1 and img1-3 by using the intermediate image img2-1 as a reference.

For example, the second device may perform alignment processing on img1-1 and img1-3 in a manner like affine transformation or feature point alignment, so that misplacement impact caused by jitter when the second device obtains an image of an ROI can be reduced.

In another example, the second device may alternatively perform alignment processing on a plurality of frames of images by using img1-1 or img1-3 as a reference.

It should be understood that the second device may alternatively perform alignment processing on the image in another existing multi-frame alignment manner. This is not limited in this embodiment of this application.

Step 3: The second device determines severities of moiré patterns in img1-2 and img2-2 to imgn-2.

For example, img1-2 is used as an example. The second device performs binarization processing on the image img1-2 to obtain a binarized image img1-2, and determines a severity of a moiré pattern based on a particle density in the image img1-2.

For example, the second device may classify the moiré pattern into three severities: none, low, and high based on the particle density. Alternatively, the second device may classify the severity of the moiré pattern based on another indicator. This is not limited in this application.

For example, if the second device determines that the particle density is less than a first density threshold, the second device may determine that there is no moiré pattern. If the second device determines that the particle density is greater than a first density threshold or less than or equal to a second density threshold, and the second density threshold is twice the first density threshold, the second device may determine that the severity of the moiré pattern is low. If the second device determines that the particle density is greater than a second density threshold, the second device may determine that the severity of the moiré pattern is high.

It should be understood that the second device may further classify the moiré pattern into two severities: there is no or there is a moiré pattern, or the second device may further classify the moiré pattern into more severities. This is not limited in this application.

In this way, the second device may determine a severity of the moiré pattern in the image, to help subsequently remove the moiré pattern.

Step 4: The second device respectively sets binarization thresholds based on the severities of the moiré patterns in img1-2 and img2-2 to imgn-2, to obtain binarized images img1-3 and img2-3 to imgn-3.

For example, img1-2 is used as an example. If there is no moiré pattern in img1-2, the second device may set a first grayscale threshold, and filter out a part whose grayscale value of a pixel is less than the first grayscale threshold and that is in the grayscale image. If there is a moiré pattern in img1-2, and a severity of the moiré pattern is low, the second device may set a second grayscale threshold, and filter out a part whose grayscale value of a pixel is less than the second grayscale threshold and that is in the grayscale image. If there is a moiré pattern in img1-2, and a severity of the moiré pattern is high, the second device may set a third grayscale threshold w3, and filter out a part whose grayscale value of a pixel is less than the third grayscale threshold and that is in the grayscale image.

A higher severity of the moiré pattern indicates a larger grayscale threshold corresponding to the severity of the moiré pattern. Correspondingly, the first grayscale threshold is less than the second grayscale threshold, and the second grayscale threshold is less than the third grayscale threshold.

It should be understood that the first grayscale threshold, the second grayscale threshold, and the third grayscale threshold may be set by a developer, or may be determined by the second device based on a distribution status of the moiré pattern. This is not limited in this embodiment of this application.

In this way, the second device sets a corresponding filtering threshold based on the severity of the moiré pattern, so that the moiré pattern can be filtered out as much as possible, and impact of the moiré pattern on an identification result is reduced.

Step 5: The second device performs an OR operation on the binarized images img1-3 and img2-3 to imgn-3 to obtain an image img-a.

The second device performs an OR operation on the plurality of frames of binarized images, so that the obtained img-a can include more feature particles, to improve a decoding probability of the second device.

It should be understood that step 5 is an optional step. In some examples, step 5 may not be performed.

Step 6: The second device performs threshold filtering on an area of a particle in the image img-a, to obtain an image img-f.

For example, the second device may determine areas of all particles in the image img-a, and sort the particles in descending order of the areas. Then, the second device may set a first area threshold to perform filtering on the particles. For example, if the first area threshold is 70%, the second device may reserve first 70% particles.

It should be understood that the first area threshold may alternatively be another value, for example, 65% or 75%. A specific value of the first area threshold is not limited in this embodiment of this application.

In some other examples, the second device may determine areas of all particles in the image img-a, and set a second area threshold to perform filtering on the particles. For example, a particle whose area is less than or equal to the second area threshold and that is in img-a is filtered out, and a particle whose area is greater than the second area threshold is reserved.

Step 7: The second device parses the image img-f to obtain device connection information.

It should be understood that a specific execution sequence of steps 1 to 7 is not limited in this embodiment of this application. In another example, steps 3 to 6 in steps 1 to 7 are optional steps.

The device connection information may be a connection and pairing code. Alternatively, the device connection information may further include a device identifier, a MAC address, and the like of a first device. In this embodiment of this application, an example in which the device connection information is a 6-digit connection and pairing code is used for description.

In an example, the second device may evenly divide a ring region in which a particle in the image img-f is located into a plurality of regions, and determine a corresponding digit based on a quantity of particles in each region.

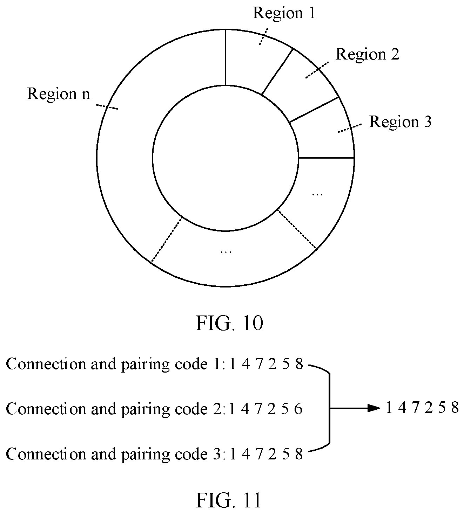

For example, FIG. 10 is a diagram of a ring region according to an embodiment of this application. Refer to FIG. 10. The second device may sequentially divide the ring region into n regions: a region 1, a region 2, a region 3, ..., and a region n, and separately decode the n regions, to obtain corresponding numbers. It should be understood that a specific value of n is not limited in this embodiment of this application. For example, n is 6, and a group of connection and pairing code may be encoded in the region 1 to the region 6. Alternatively, n is 9. In this case, the second device may perform redundancy decoding on a part of a connection and pairing code, and correspondingly, the first device also performs redundant encoding on the part of the connection and pairing code. The first device uses this redundant encoding manner. When a part of regions in the region 1 to the region n cannot be identified by the second device, the second device can still successfully obtain the connection and pairing code, thereby improving a possibility of successful decoding by the second device.

It should be understood that the first device may perform cyclic encoding on the n regions. For example, when n is 18, the first device may perform cyclic encoding on a 6-digit connection and pairing code, and may encode three groups of 6-digit connection and pairing codes. In this redundant encoding manner, the possibility of successful decoding by the second device can be improved.

In another example, the first device may further set a verification bit in a 1st region of each group of connection and pairing code or in a region before a region of each group of connection and pairing code, so that the second device can determine a sequence of digits in the connection and pairing code.

The second device may determine, based on a quantity of particles in each region, a digit encoded in the region. For example, if there is one particle in the region 1, it may be determined that a digit encoded in the region 1 is 1; and if there are four particles in the region 2, it may be determined that a digit encoded in the region 2 is 4.

The second device may obtain a final 6-digit connection and pairing code, for example, 147258, in the foregoing decoding manner.

It should be understood that the second device may further sequentially divide the ring region into more regions, for example, 15 regions, 18 regions, or 24 regions, so that the possibility of successful decoding by the second device can be improved.

In another example, the second device may evenly divide a ring region in which a particle in the image img-f is located into a plurality of regions, for example, six regions, and determine a corresponding digit based on a distribution of a particle in each region.

For example, for the region 1, the second device may evenly divide the region 1 into 10 grids (whose numbers are respectively 0 to 9). If there is one particle in the region 1, a digit represented by the region may be determined based on a grid in which the particle is located. For example, if the particle is located in a 1st grid, it may be determined that the region 1 corresponds to a digit 1.

If there are a plurality of particles in the region 1, a number of a grid including a largest quantity of particles is determined as a digit obtained through decoding. For example, if a 2nd grid includes the largest quantity of particles, it may be determined that the region 1 corresponds to the number 2.

In some cases, to improve a probability that the second device successfully performs decoding to obtain a correct connection and pairing code, the second device may further determine the final connection and pairing code with reference to results of a plurality of decodings.

For example, FIG. 11 is a diagram of determining a connection and pairing code with reference to results of a plurality of decodings according to an embodiment of this application. As shown in FIG. 11, in the decoding manners in FIG. 9A and FIG. 9B and FIG. 10, the second device decodes three frames of images: an image 1, an image 2, and an image 3 to obtain a connection and pairing code 1 "147258", decodes three frames of images: the image 2, the image 3, and an image 4 to obtain a connection and pairing code 2 "147256", and decodes three frames of images: the image 3, the image 4, and an image 5 to obtain a connection and pairing code 3 "147258". In this case, the second device may finally determine that an obtained connection and pairing code is "147258". In this way, even if a last digit in the connection and pairing code 2 obtained by the second device through decoding is incorrect, the second device may determine the final correct connection and pairing code with reference to the connection and pairing code 1 and the connection and pairing code 3.

It should be understood that, in FIG. 11, three results obtained by the second device are merely used as an example for description. In another example, the second device may further obtain more results, to improve correctness of the finally determined connection and pairing code.

According to this embodiment of this application, the second device may determine the final connection and pairing code with reference to the results of a plurality of decodings, to avoid a device connection failure caused by one incorrect decoding.

It should be understood that, after obtaining the device connection information, the second device may establish a connection relationship with the first device based on the device connection information.

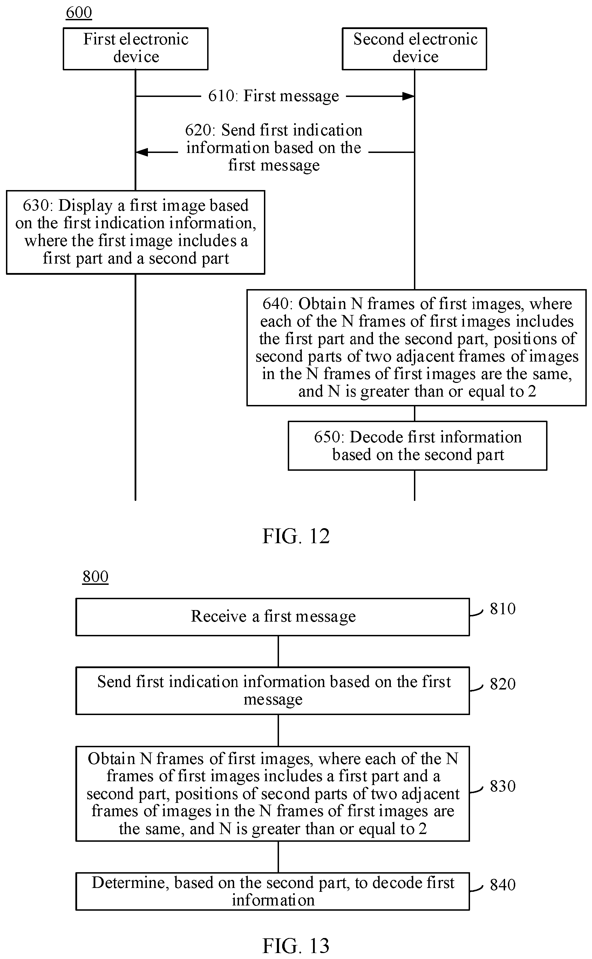

FIG. 12 is an interaction diagram of an information transmission method according to an embodiment of this application. As shown in FIG. 12, the method 600 may be applied to a first electronic device and a second electronic device, and the method 600 may include at least step 610 to step 650.

It should be understood that the first electronic device may be the foregoing first device, and the second electronic device may be the foregoing second device.

610: The first electronic device sends a first message. Correspondingly, the second electronic device receives the first message.

For example, the first message may be a Bluetooth broadcast message. The first message may alternatively be another wireless message. This is not limited in this embodiment of this application.

The first message may be used to search for a device around the first electronic device.

620: The second electronic device sends first indication information to the first electronic device based on the first message.

The first indication information may indicate that there is a device around the first electronic device. Alternatively, the first indication information may be confirmation information after the first message is scanned.

In some examples, the second electronic device further displays a target display interface based on the first message, where the target display interface may include information related to the first electronic device. The second electronic device may send, in response to an operation of a user on the target display interface, the first indication information to the first electronic device.

630: The first electronic device displays a first image based on the first indication information, where the first image includes a first part and a second part.

It should be understood that the first part may be a background of the first image, and the second part may be a part in which first information is encoded in the first image. For example, the second part may be superimposed in the first part.

For example, refer to FIG. 3(d). The first image may be an image corresponding to the display interface 240, the second part may be an information point in the ring pattern in the image, and the first part may be a background part other than the information point.

It should be understood that, when an electronic device displays N frames of first images, positions of second parts in two adjacent frames of images in the N frames of first images are the same, and N is greater than or equal to 2.

In another example, colors of the second parts in the two adjacent frames of images in the N frames of images may be different. Alternatively, colors of second parts in any three consecutive frames of images in the N frames of images may be different. This is not limited in this embodiment of this application.

In another example, the second parts in the two adjacent frames of images in the N frames of images may be for encoding same information or different information. When the second parts are for encoding different information, the first electronic device may divide information that needs to be encoded into a plurality of parts, and separately encode the plurality of parts in second parts in different frames of images. Alternatively, a plurality of consecutive frames of images in the N frames of images may be for encoding different information, and a plurality of groups of information may be encoded in the N frames of images. This is not limited in this embodiment of this application.

When second parts in a plurality of frames of first images are for encoding different information, the first electronic device may divide information that needs to be encoded into a plurality of parts. Each frame of image may be for encoding a part of the information, and the plurality of frames of images are combined for encoding the complete information.

For example, three frames of images are used as an example. The first electronic device may divide information that needs to be encoded into information A, information B, and information C, and encode the information A, the information B, and the information C respectively in three consecutive frames of images.

In another example, first parts in the two adjacent frames of images in the N frames of first images may be the same or may be different. For example, a part of particles included in the first part may be moved, or a color may change.

In some examples, the first part or the second part may have an animation effect. For example, a plurality of particles that form a ring pattern may gradually converge into a ring, and have a flowing effect.

640: The second electronic device obtains the N frames of first images, where each of the N frames of first images includes the first part and the second part, the positions of the second parts in two adjacent frames of images in the N frames of first images are the same, and N is greater than or equal to 2.

For example, the second electronic device may invoke a camera to obtain the N frames of first images, or the second electronic device may invoke a camera lens to obtain the first image.

650: The second electronic device decodes the first information based on the second part.

For example, refer to FIG. 9A and FIG. 9B. The second part may be a particle corresponding to img-f, and the first information may be a connection and pairing code. The second electronic device may decode img-f to obtain a connection and pairing code 147258. The first information that needs to be transmitted by the second electronic device is encoded in the second part. The second electronic device decodes the second part in the obtained image, to determine the first information in the second part.

For example, when the second part in each of the N frames of first images is for encoding same first information, the second electronic device may decode a plurality of consecutive frames of images (for example, two or three frames of images), and determine, based on a decoding result of each frame of image, first information encoded in each frame of image. Alternatively, the second electronic device may select one of the plurality of frames of images for decoding, to determine first information encoded in the frame of image.

For example, when the second part in each of the N frames of first images are for encoding different information, the second electronic device may decode second parts in a plurality of consecutive frames of first images, and combine decoding results to determine final first information.

Optionally, after obtaining the first information through decoding, the second electronic device may perform a first operation based on the first information.

For example, the first information may be device connection information. In this case, the first operation is sending a device connection request. When the second electronic device needs to establish a connection relationship with the first electronic device, the second electronic device may send the device connection request to the first electronic device based on the device connection information, and establish the connection relationship with the first electronic device.

For example, the first information may be account login information. In this case, the first operation may be an operation of logging in to an account.

For example, the first information may alternatively be first data. In this case, the first operation may be an operation of obtaining the first data.

For example, the first information may alternatively be a conference link. In this case, the first operation is an operation of attending a conference attendance.

For example, the first information may alternatively be a website address. In this case, the first operation is an operation of accessing the website address.

For example, the first information may alternatively be projection information. In this case, the first operation is a projection operation.

It should be understood that the first information may further include other content. This is not limited in this embodiment of this application.

Based on a system provided in this embodiment of this application, the first electronic device may encode, in the second part in the first image, the first information that needs to be transmitted, and the second electronic device may obtain the N frames of first images, and obtain the first information through decoding based on the second part.

For example, during device connection, the second electronic device may scan or shoot the image displayed by the first electronic device, to obtain device connection information (a connection and pairing code) in the image, thereby quickly establishing a device connection. When migration to a new device or data clone is performed, a path for device interaction can be shortened, and a sense of technology can be improved.

In some implementations, before decoding the first information based on the second part, the second electronic device is further configured to perform color space conversion on the N frames of first images to obtain N frames of second images.

According to this embodiment of this application, the second electronic device performs color space conversion on the first image, so that impact caused by light reflection in the first image can be reduced.

For example, the first image is converted from RGB color space to HSV color space or hue, saturation, and intensity HSI color space.

In some embodiments, the second electronic device is specifically configured to:

convert the N frames of first images from the red, green, and blue RGB color space into the hue, saturation, and value HSV color space;
perform filtering for a hue H domain of all of the N frames of first images to obtain the N frames of second images, where an angle value corresponding to a hue H domain included in the second image is greater than a first preset value and less than a second preset value;
perform binarization processing on the N frames of second images to obtain N frames of third images; and

determine the second part based on the N frames of third images.

For example, refer to FIG. 7. One frame of image is used as an example for description. The second image may be an image that includes a blue component and that is obtained through filtering for the hue H domain. The third image may be an image obtained through binarization processing on the second image.

The second part may be a ring region, or may be a part of information points included in a ring region.

It should be understood that specific values of the first preset value and the second preset value are not limited in this embodiment of this application.

According to this embodiment of this application, light reflection existing in the first image can be filtered out through color space conversion and corresponding threshold filtering, to reduce interference caused by the light reflection to obtaining the second part by the second electronic device, and improve a possibility of successful decoding.

In some embodiments, the second electronic device is specifically configured to:

perform a closing operation on the N frames of third images; and determine the second part based on a result of the closing operation; or
perform cluster analysis on particles in the N frames of third images; and determine the second part based on a result of the cluster analysis.

For example, refer to FIG. 8. In some scenarios in which light reflection is severe or the ring region is highly incomplete, the second electronic device may perform cluster analysis on the particle in the third image obtained through binarization processing, to determine the ring region. The second part may be a ring region, or may be a part of information points included in a ring region.

According to this embodiment of this application, the second part is determined in a closing operation manner, so that the interference caused by the light reflection to obtaining the second part by the second electronic device can be reduced, and the possibility of successful decoding can be improved. In addition, when the second part is heavily blocked or has severe light reflection, the second part can still be successfully obtained based on the result of the cluster analysis, thereby improving the possibility that the electronic device successfully decodes the second part subsequently.

In some embodiments, before performing cluster analysis on the N frames of third images, the second electronic device is further configured to filter out a particle whose area is less than a first area threshold in the N frames of third images.

For example, refer to step 4 in FIG. 8. The particle whose area is less than the first area threshold and that is in the third image may be filtered out.

According to this embodiment of this application, a particle with a small area in the third image can be filtered out, so that interference caused by the particle with the small area to obtaining the second part can be reduced.

In some embodiments, the second electronic device is specifically configured to:

perform intra-frame differential processing on the second part in each of the N frames of first images to obtain N frames of grayscale images, where the intra-frame differential processing involves taking an absolute value of a sum of differences between a first channel image in the second part and a second channel image and between the first channel image in the second part and a third channel image, and the first channel image, the second channel image, and the third channel image are distinct selections from a red R channel image, a green G channel image, and a blue B channel image;
separately perform inter-frame differential processing on the N frames of grayscale images to obtain N frames of differential images;
perform binarization processing on the N frames of differential images to obtain N frames of fourth images;
perform OR operation processing on the N frames of fourth images to obtain a first target image; and
obtain the first information based on the first target image.

For example, the first channel image is the B channel image, the second channel image is the R channel image, and the third channel image is the G channel image.

It should be understood that, for intra-frame differential processing and inter-frame differential processing, refer to the foregoing related descriptions in FIG. 9A and FIG. 9B. Details are not described herein again.

For example, refer to FIG. 9A and FIG. 9B. The fourth image may be img1-3 to imgn-3, and the first target image may be img-a.

According to this embodiment of this application, the second electronic device may perform decoding based on the second parts included in the N frames of images, to successfully obtain the first information encoded in the second parts.

In some embodiments, the second electronic device is specifically configured to:

filter out a particle whose area is less than a second area threshold in the first target image, to obtain a second target image; and
decode the first information based on the second target image.

For example, refer to FIG. 9A and FIG. 9B. The second target image may be img-f.

According to this embodiment of this application, a particle with a small area in the first target image can be filtered out by performing filtering on a particle in the first target image, so that interference caused by the particle with the small area to a decoding result can be reduced.

In some embodiments, before performing binarization processing on the N frames of differential images, the second electronic device is further configured to:
separately determine a severity of a moiré pattern in each of the N frames of differential images.

The second electronic device is specifically configured to:

filter out a pixel whose grayscale value is less than a third preset value in the N frames of differential images, where the third preset value is related to the severity of the moiré pattern; and
perform binarization processing on N frames of filtered differential images to obtain the N frames of fourth images.

It should be understood that, for determining the severity of the moiré pattern by the second electronic device, refer to the foregoing related descriptions of determining the severity of the moiré pattern by the second device. This is not limited in this embodiment of this application.

According to this embodiment of this application, the second electronic device may further determine the severity of the moiré pattern in the image, and set a filtering threshold based on the severity of the moiré pattern, thereby reducing interference caused by the moiré pattern and helping improve a probability of successful decoding.

In some embodiments, the first electronic device sends the first message after the first electronic device is started up for a first time; or when performing data clone, sends the first message in response to an operation that is selected by a user and that indicates a new device, or in response to an operation that is selected by a user and that indicates an old device type.

In this way, when the electronic device is started up for the first time or when the electronic device is not started up for the first time to perform data clone, the electronic device may send the first message to the outside, to search for the surrounding device. This technical solution helps the first electronic device search for the device when needed, to perform a subsequent device connection operation, so that power consumption of the electronic device can be reduced to some extent.

In some embodiments, the first electronic device is further configured to receive first data information sent by the second electronic device, where the first data information includes information about a logged-in account on the second electronic device and/or information about a wireless network connected to the second electronic device.

It should be understood that the information about the wireless network connected to the second electronic device may include a historically connected wireless network or a currently connected wireless network.

In another example, the first data information may further include content such as a privacy statement and a setting of the second electronic device. This is not limited in this embodiment of this application.

According to this embodiment of this application, the second electronic device sends data such as the account information and the wireless network information to the first electronic device, so that the user does not need to manually perform operations such as account login and wireless connection on the first electronic device, to improve operation experience of the user on the first electronic device. For example, the first electronic device is a smartphone newly purchased by the user. In this manner, the new mobile phone can automatically log in to an account of the user and automatically access a wireless network.

In some embodiments, the first electronic device is further configured to: receive second indication information sent by the second electronic device, where the second indication information indicates second data information in the second electronic device; and display a second display interface based on the second indication information, where the second display interface includes a first display card and a second display card, the first display card indicates to import the second data information from the second electronic device, and the second display card indicates to download third data information from a cloud server.

According to this embodiment of this application, the first electronic device may display an option used for data transmission, for the user to select.

In some embodiments, the first electronic device is further configured to: display a third display interface in response to an operation of tapping the first display card by the user, where the third display interface includes a type and a size of the second data information; send third indication information to the second electronic device in response to an operation that is performed by the user on the third display interface and that indicates to import data, where the third indication information indicates to start to import data corresponding to the second data information; and receive the data that is sent by the second electronic device and that corresponds to the second data information; or display a fourth display interface in response to an operation of tapping the second display card by the user, where the fourth display interface includes a type and a size of the third data information; and import data corresponding to the third data information from the cloud server in response to an operation that is performed by the user on the fourth display interface and that indicates to import data.

According to this embodiment of this application, the first electronic device may implement transmission based on an operation of the user, so that the first electronic device can be quickly available.

In some embodiments, the second part is a ring pattern, and a distance between the second electronic device and the first electronic device is less than or equal to a preset distance.

It should be understood that the second part may alternatively be in another shape. This is not limited in this embodiment of this application.

FIG. 13 is a schematic flowchart of an information transmission method according to an embodiment of this application. As shown in FIG. 13, a method 800 may be applied to a second electronic device, and the method 800 may include at least step 810 to step 840.

810: The second electronic device receives a first message.

The first message may be a message used to search for a device. For example, the first message is a Bluetooth broadcast message.

820: The second electronic device sends first indication information based on the first message.

830: The second electronic device obtains N frames of first images, where each of the N frames of first images includes a first part and a second part, positions of second parts in two adjacent frames of images in the N frames of first images are the same, and N is greater than or equal to 2.

In another example, colors of the second parts in the two adjacent frames of images in the N frames of images are different.

Second parts in the N frames of images may be for encoding same information or different information. This is not limited in this embodiment of this application.

840: The second electronic device decodes first information based on the second part.

For example, the first information may include device connection information, for example, a connection and pairing code. When the second electronic device needs to establish a connection relationship with a first electronic device, the second electronic device may send a device connection request to the first electronic device based on the device connection information, and establish the connection relationship with the first electronic device.

For example, the first information may be account login information. In this case, the second electronic device may log in to an account based on the account login information.

For example, the first information may alternatively be first data. In this case, the second electronic device may obtain the first data.

For example, the first information may alternatively be a conference link. In this case, the second electronic device may be for attending a conference based on the conference link.

For example, the first information may alternatively be a website address. In this case, the second electronic device may access the website address.

For example, the first information may be projection information. In this case, the second electronic device may perform projection.

It should be understood that the first information may further include other content. This is not limited in this embodiment of this application.

It should be further understood that an operation performed by the second electronic device after the second electronic device obtains the first information is not limited in this embodiment of this application.

According to this embodiment of this application, the second electronic device may obtain the N frames of images, and decode the second parts in the N frames of images, to obtain the first information in the second parts, and may perform a corresponding operation based on the first information. In this technical solution, information transmission between two devices can be conveniently implemented, an interaction path for information transmission between the devices can be shortened, and a sense of technology can be improved.

In an implementation, before decoding the first information based on the second part, the method further includes: performing color space conversion on the N frames of first images to obtain N frames of second images.

According to this embodiment of this application, the second electronic device performs color space conversion on the first image, so that impact caused by light reflection in the first image can be reduced.

In some embodiments, performing color space conversion on the N frames of first images to obtain the N frames of second images includes:

converting the N frames of first images from red, green, and blue RGB color space into hue, saturation, and value HSV color space;
performing filtering for a hue H domain of all of the N frames of first images to obtain the N frames of second images, where an angle value corresponding to a hue H domain included in the second image is greater than a first preset value and less than a second preset value;
performing binarization processing on the N frames of second images to obtain N frames of third images; and
determining the second part based on the N frames of third images.

In some embodiments, determining the second part based on the N frames of third images includes:

performing cluster analysis on particles in the N frames of third images; and
determining the second part based on a result of the cluster analysis; or

performing cluster analysis on particles in the N frames of third images; and
determining the second part based on a result of the cluster analysis.

In some embodiments, before performing cluster analysis on the N frames of third images, the method further includes: filtering out a particle whose area is less than a first area threshold in the N frames of third images.

In some embodiments, decoding the first information based on the second portion includes:

performing intra-frame differential processing on the second part in each of the N frames of first images to obtain N frames of grayscale images, where the intra-frame differential processing involves taking an absolute value of a sum of differences between a first channel image in the second part and a second channel image and between the first channel image in the second part and a third channel image, and the first channel image, the second channel image, and the third channel image are distinct selections from a red R channel image, a green G channel image, and a blue B channel image; separately performing inter-frame differential processing on the N frames of grayscale images to obtain N frames of differential images;
performing binarization processing on the N frames of differential images to obtain N frames of fourth images;
performing OR operation processing on the N frames of fourth images to obtain a first target image; and
obtaining the first information based on the first target image.

In some embodiments, decoding the first information based on the first target image includes: filtering out a particle whose area is less than a second area threshold in the first target image, to obtain a second target image; and decoding the first information based on the second target image.

In some embodiments, the method further includes:
separately determining a severity of a moiré pattern in each of the N frames of differential images.

Performing binarization processing on the N frames of differential images to obtain the N frames of fourth images includes:

filtering out a pixel whose grayscale value is less than a third preset value in the N frames of differential images, where the third preset value is related to the severity of the moiré pattern; and
performing binarization processing on N frames of filtered differential images to obtain the N frames of fourth images.

In some embodiments, the first information includes at least one of the connection and pairing code, the account login information, a product serial number, and a media access control MAC address.

It should be understood that the first information may further include other information such as a verification code and the website address. This is limited in this embodiment of this application.

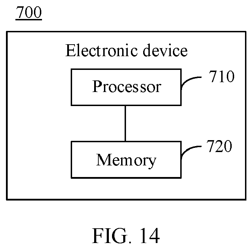

FIG. 14 is a block diagram of an electronic device according to an embodiment of this application. As shown in FIG. 14, an electronic device 700 may include one or more processors 710 and one or more memories 720. The one or more memories 720 store one or more instructions, and when the instructions are executed by the one or more processors 710, the information transmission method in any one of the foregoing possible implementations is performed.

For example, the electronic device 700 may be the foregoing first device, second device, electronic device 200, electronic device 300, or electronic device 400.

An embodiment of this application further provides an apparatus, including a processor and a communication interface. The communication interface is configured to receive a signal, and transmit the signal to the processor, and the processor processes the signal, to cause the information transmission method in any one of the foregoing possible implementations to be performed.

The apparatus may be a chip. For example, the chip may be a chip system or an independent chip.

An embodiment of this application further provides a readable storage medium. The readable storage medium stores instructions, and when the instructions are run on an electronic device, the electronic device is enabled to perform the foregoing related method steps to implement the information transmission method in the foregoing embodiments.

An embodiment of this application further provides a program product. When the program product runs on an electronic device, the electronic device is enabled to perform the foregoing related steps to implement the information transmission method in the foregoing embodiments.

An embodiment of this application further provides an apparatus, including a module configured to implement the information transmission method in any one of the foregoing embodiments.

In addition, an embodiment of this application further provides an apparatus. The apparatus may be specifically a chip, a component, or a module. The apparatus may include a processor and a storage that are connected. The storage is configured to store instructions, and when the apparatus runs, the processor may execute the instructions stored in the storage, to cause the apparatus to perform the information transmission method in the foregoing method embodiments.

The device, the readable storage medium, the program product, or the apparatus provided in embodiments is configured to perform the corresponding method provided above. Therefore, for beneficial effects that can be achieved, refer to the beneficial effects of the corresponding method provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission system, wherein the system comprises a first electronic device and a second electronic device, wherein

   the first electronic device is configured to send a first message, wherein the first message is used to search for a device around the first electronic device;
   the second electronic device is configured to:

   receive the first message; and
   send first indication information based on the first message;
   the first electronic device is further configured to display a first image based on the first indication information, wherein the first image comprises a first part and a second part; and
   the second electronic device is further configured to:

   obtain N frames of first images, wherein each of the N frames of first images comprises the first part and the second part, positions of second parts in two adjacent frames of images in the N frames of first images are the same, and N is greater than or equal to 2; and
   decode first information based on the second part.

2. The system according to claim 1, wherein before the decoding, by the second electronic device, the first information based on the second part, the second electronic device is further configured to:

perform color space conversion on the N frames of first images to obtain N frames of second images.

3. The system according to claim 2, wherein the second electronic device is specifically configured to:

   convert the N frames of first images from red, green, and blue RGB color space into hue, saturation, and value HSV color space;
   perform filtering for a hue H domain of all of the N frames of first images to obtain the N frames of second images, wherein an angle value corresponding to a hue H domain of the second image is greater than a first preset value and less than a second preset value;
   perform binarization processing on the N frames of second images to obtain N frames of third images; and
   determine the second part based on the N frames of third images.

4. The system according to claim 3, wherein that the second electronic device is configured to determine the second part based on the N frames of third images specifically comprises:

   performing a closing operation on the N frames of third images; and
   determining the second part based on a result of the closing operation; or
   performing cluster analysis on particles in the N frames of third images; and
   determining the second part based on a result of the cluster analysis.

5. The system according to any one of claims 1 to 4, wherein that the second electronic device is configured to decode the first information based on the second part specifically comprises:

   performing intra-frame differential processing on the second part in each of the N frames of first images to obtain N frames of grayscale images, wherein the intra-frame differential processing involves taking an absolute value of a sum of differences between a first channel image in the second part and a second channel image and between the first channel image in the second part and a third channel image, and the first channel image, the second channel image, and the third channel image are distinct selections from a red R channel image, a green G channel image, and a blue B channel image; separately performing inter-frame differential processing on the N frames of grayscale images to obtain N frames of differential images; performing binarization processing on the N frames of differential images to obtain N frames of fourth images;

performing OR operation processing on the N frames of fourth images to obtain a first target image; and

obtaining the first information based on the first target image.

6. The system according to claim 5, wherein before the performing, by the second electronic device, binarization processing on the N frames of differential images, the second electronic device is further configured to:

separately determine a severity of a moiré pattern in each of the N frames of differential images; and

the second electronic device is specifically configured to:

filter out a pixel whose grayscale value is less than a third preset value in the N frames of differential images, wherein the third preset value is related to the severity of the moiré pattern; and

perform binarization processing on N frames of filtered differential images to obtain the N frames of fourth images.

7. An information transmission method, wherein the method is applied to a second electronic device, and the method comprises:

receiving a first message;

sending first indication information based on the first message;

obtaining N frames of first images, wherein each of the N frames of first images comprises a first part and a second part, positions of second parts in two adjacent frames of images in the N frames of first images are the same, and N is greater than or equal to 2; and

decoding first information based on the second part.

8. The method according to claim 7, wherein before the decoding the first information based on the second part, the method further comprises:

performing color space conversion on the N frames of first images to obtain N frames of second images.

9. The method according to claim 8, wherein the performing color space conversion on the N frames of first images to obtain the N frames of second images comprises:

converting the N frames of first images from red, green, and blue RGB color space into hue, saturation, and value HSV color space; and

performing filtering for a hue H domain of all of the N frames of first images to obtain the N frames of second images, wherein angle values corresponding to hue H domains of the N frames of second images are greater than a first preset value and less than a second preset value; and the method further comprises:

performing binarization processing on the N frames of second images to obtain N frames of third images; and

determining the second part based on the N frames of third images.

10. The method according to claim 9, wherein the determining the second part based on the N frames of third images comprises:

performing a closing operation on the N frames of third images; and

determining the second part based on a result of the closing operation; or

performing cluster analysis on the N frames of third images; and

determining the second part based on a result of the cluster analysis.

11. The method according to claim 10, wherein before the performing cluster analysis on the N frames of third images, the method further comprises:

filtering out a particle whose area is less than a first area threshold in the N frames of third images.

12. The method according to any one of claims 7 to 11, wherein the decoding the first information based on the second part comprises:

performing intra-frame differential processing on the second part in each of the N frames of first images to obtain N frames of grayscale images, wherein the intra-frame differential processing involves taking an absolute value of a sum of differences between a first channel image in the second part and a second channel image and between the first channel image in the second part and a third channel image, and the first channel image, the second channel image, and the third channel image are distinct selections from a red R channel image, a green G channel image, and a blue B channel image;

separately performing inter-frame differential processing on the N frames of grayscale images to obtain N frames of differential images;

performing binarization processing on the N frames of differential images to obtain N frames of fourth images;

performing OR operation processing on the N frames of fourth images to obtain a first target image; and
decoding the first information based on the first target image.

13. The method according to claim 12, wherein the decoding the first information based on the first target image comprises:

filtering out a particle whose area is less than a second area threshold in the first target image, to obtain a second target image; and
decoding the first information based on the second target image.

14. The method according to claim 12 or 13, wherein before the performing binarization processing on the N frames of differential images, the method further comprises:

separately determining a severity of a moiré pattern in each of the N frames of differential images; and
the performing binarization processing on the N frames of differential images to obtain the N frames of fourth images comprises:

filtering out a pixel whose grayscale value is less than a third preset value in the N frames of differential images, wherein the third preset value is related to the severity of the moiré pattern; and
performing binarization processing on N frames of filtered differential images to obtain the N frames of fourth images.

15. The method according to any one of claims 7 to 14, wherein the first information comprises at least one of a connection and pairing code, account login information, a product serial number, and a media access control MAC address.

16. The method according to any one of claims 7 to 15, wherein the method further comprises:
sending first data information, wherein the first data information comprises information about a logged-in account on the second electronic device or information about a wireless network connected to the second electronic device.

17. An electronic device, comprising one or more processors and one or more storages, wherein the one or more storages store one or more programs, and when the one or more programs are executed by the one or more processors, the information transmission method according to any one of claims 7 to 16 is performed.

18. A chip, wherein the chip comprises a processor and a communication interface, the communication interface is configured to receive a signal, and transmit the signal to the processor, and the processor processes the signal, to cause the information transmission method according to any one of claims 7 to 16 to be performed.

19. A readable storage medium, wherein the readable storage medium stores instructions, and when the instructions are run on a device, the information transmission method according to any one of claims 7 to 16 is performed.

20. A program product, wherein the program product comprises program code, and when the program code is run on an electronic device, the information transmission method according to any one of claims 7 to 16 is performed.

Electronic device 100

Antenna 1                                    Antenna 2

| Mobile communication module 2G/3G/4G/5G [150] | Wireless communication module BT/WLAN/GNSS/NFC/IR/FM [160] |

| Speaker [170A] | | | Sensor module [180] |
| Receiver [170B] | Audio module [170] | | Pressure sensor [180A] |
| Microphone [170C] | | | Gyroscope sensor [180B] |
| Headset jack [170D] | | | Barometric pressure sensor [180C] |
| Displays 1 to N [194] | | | Magnetic sensor [180D] |
| Camera lenses 1 to N [193] | | Processor [110] | Acceleration sensor [180E] |
| Indicator [192] | | | Distance sensor [180F] |
| Motor [191] | | | Optical proximity sensor [180G] |
| Button [190] | | | Fingerprint sensor [180H] |
| Internal memory [121] | | | Temperature sensor [180J] |
| SIM card interfaces 1 to N [195] | | | Touch sensor [180K] |
| Interface [120] for external memory | | | Ambient light sensor [180L] |
| USB interface [130] | Charging management module [140] | Power management module [141] | Bone conduction sensor [180M] |
| Charging input | | Battery [142] | |

FIG. 1

| Application layer | Camera | Calendar | Map | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | |
|---|---|---|---|
| | Two-dimensional graphics engine | Media library | Image processing library | ... |

| Kernel layer | Display driver | Camera driver | |
|---|---|---|---|
| | Audio driver | Sensor driver | ... |

FIG. 2

FIG. 3(a)

200

FIG. 3(b)

200

Getting Started

230

231

Hello

Searching for a nearby device

Setting without the nearby device

FIG. 3(c)

200

FIG. 3(d)

200

250

Lock Screen Password Verification

Enter a lock screen password of "XXX" for security verification

● ● ● ● ● ●

The password you entered will be used as a password for this new device

| 1 | 2 | 3 |
|---|---|---|
| 4 | 5 | 6 |
| 7 | 8 | 9 |
| ✓ | 0 | ⌫ |

FIG. 3(e)

FIG. 3(f)

200

5G 📶 5G 📶 ▬ 8:00 260

‹

Data Import

261

Directly import from a device in use

It takes about 20 minutes ›

262

Download from a cloud backup

It takes about 15 minutes ›

263

Skipping
Transmitting Data

FIG. 3(g)

200

Data Import

2651

Basic data

1526 items, 45.3 GB

2652

Applications and data

2531 items, 35.6 GB

2653

System settings

531 items, 5 MB

2654

Starting the Import

265

8:00

FIG. 3(h)

200

Importing Data

271

It takes about 20 minutes. Please wait.

FIG. 3(i)

FIG. 3(j)

200

5G 5G  8:00 ——280

| Clock | Calendar | Gallery | Notes |

Jan 15

| Files | Email | Music | Calculator |

| Camera | Contacts | Phone | Messages |

FIG. 3(k)

300

310

08:00

Thursday, January 1

Camera   Contacts   Phone   Messages

FIG. 4(a)

300

08:00

Thursday, January 1

311

3111

P60

3112

Setting

FIG. 4(b)

300

FIG. 4(c)

300

5G 5G (wifi) 8:00

**08:00**

Thursday, January 1

313

⊗

Connecting…

● ○

FIG. 4(d)

300

08:00

Thursday, January 1

314

Operate on the New Device

FIG. 4(e)

300

08:00

Thursday, January 1

315

Importing Data

FIG. 4(f)

300

08:00

Thursday, January 1

316

Try It Out!

Completed

FIG. 4(g)

300

5G 5G 🛜 ▮▮▮ 8:00 — 312

Scan for
Verification

Align the viewfinder frame with the pattern
on the new device

— 3121

350

Manual Verification

FIG. 5

400

410

FIG. 6(a)

400

420

Data Clone

421

↑ This is an old device

↓ This is a new device

422

FIG. 6(b)

400

5G 5G          ▮ 8:00

430

< 

Select the Old Device

Another old device

Huawei                    >

Android                   >

FIG. 6(c)

400

FIG. 6(d)

400

Lock Screen Password Verification

Enter a lock screen password of "XXX" for security verification

● ● ● ● ● ●

The password you entered will be used as a password for this new device

| 1 | 2 | 3 |
|---|---|---|
| 4 | 5 | 6 |
| 7 | 8 | 9 |
| ✓ | 0 | ⟨☒ |

FIG. 6(e)

400

FIG. 6(f)

400

Data Import

Directly import from a device in use

It takes about 20 minutes

Download from a cloud backup

It takes about 15 minutes

Skipping Transmitting Data

FIG. 6(g)

400

FIG. 6(h)

400

Importing Data

It takes about 20 minutes. Please wait.

FIG. 6(i)

400

HarmonyOS 5.0

Try It Out!

Try Now

FIG. 6(j)

400

FIG. 6(k)

Step 1: HSV domain

H domain
S domain
V domain

Blue component

Step 2: Threshold filtering

Threshold filtering

Threshold filtering

Blue component

Step 3: Set S and V thresholds, and perform binarization processing

Step 4: Perform a closing operation

Step 5: ROI extraction

FIG. 7

FIG. 8

img1    img2    imgn

Step 1: Intra-frame differencing

img1-1   img2-1   imgn-1

Step 2: Inter-frame differencing

img1-2   img2-2   imgn-2

Step 3: Determine a severity of a moiré pattern

TO FIG. 9B

FIG. 9A

CONT. FROM FIG. 9A

Step 4: Set a binarization threshold based on the severity of the moiré pattern

img1-3  img2-3  ...  imgn-3

Step 5: OR operation

img-a

Step 6: Threshold filtering

img-f

Step 7: Obtain a connection and pairing code

147258

FIG. 9B

Region 1

Region 2

Region n

Region 3

...

...

FIG. 10

Connection and pairing code 1: 1 4 7 2 5 8

Connection and pairing code 2: 1 4 7 2 5 6          1 4 7 2 5 8

Connection and pairing code 3: 1 4 7 2 5 8

FIG. 11

600

| First electronic device | | Second electronic device |

610: First message →

← 620: Send first indication information based on the first message

630: Display a first image based on the first indication information, where the first image includes a first part and a second part

640: Obtain N frames of first images, where each of the N frames of first images includes the first part and the second part, positions of second parts of two adjacent frames of images in the N frames of first images are the same, and N is greater than or equal to 2

650: Decode first information based on the second part

FIG. 12

800

| Receive a first message | 810 |
| Send first indication information based on the first message | 820 |
| Obtain N frames of first images, where each of the N frames of first images includes a first part and a second part, positions of second parts of two adjacent frames of images in the N frames of first images are the same, and N is greater than or equal to 2 | 830 |
| Determine, based on the second part, to decode first information | 840 |

FIG. 13

700

Electronic device

Processor ⌐ 710

Memory ⌐ 720

FIG. 14

# EP 4 773 577 A1

## INTERNATIONAL SEARCH REPORT

| | International application No. |
|---|---|
| | **PCT/CN2025/094274** |

**A. CLASSIFICATION OF SUBJECT MATTER**

H04L67/06(2022.01)i;  G06F9/451(2018.01)i

According to International Patent Classification (IPC) or to both national classification and IPC

**B. FIELDS SEARCHED**

Minimum documentation searched (classification system followed by classification symbols)

IPC: H04L: G06F

Documentation searched other than minimum documentation to the extent that such documents are included in the fields searched

Electronic data base consulted during the international search (name of data base and, where practicable, search terms used)

CNTXT, ENTXTC, ENTXT, DWPI, VEN, CNKI: 部分, 第二, 华为, 环形图案, 获取, 解码, 码, 摩尔纹, 拍摄, 区域, 荣耀, 扫描, 摄像, 设备, 提取, 图案, 图像, 显示, 相机, 信息, 隐藏, 帧, 终端, scan, code, bluetooth, connection, second, area, part, discover, pattern, extract, decode, information

**C. DOCUMENTS CONSIDERED TO BE RELEVANT**

| Category* | Citation of document, with indication, where appropriate, of the relevant passages | Relevant to claim No. |
|---|---|---|
| PX | CN 119520502 A (HUAWEI TECHNOLOGIES CO., LTD.) 25 February 2025 (2025-02-25) claims 1-20 | 1-20 |
| A | CN 118018995 A (HUAWEI TECHNOLOGIES CO., LTD.) 10 May 2024 (2024-05-10) description, paragraphs 88-115 | 1-20 |
| A | US 2020311365 A1 (AT&T INTELLECTUAL PROPERTY I, L.P.) 01 October 2020 (2020-10-01) claim 1 | 1-20 |
| A | CN 102857619 A (GDS SOFTWARE (SHENZHEN) CO., LTD. et al.) 02 January 2013 (2013-01-02) entire document | 1-20 |
| A | CN 104899537 A (LENOVO (BEIJING) CO., LTD.) 09 September 2015 (2015-09-09) entire document | 1-20 |
| A | CN 112099892 A (QINGDAO HISENCE MOBILE COMMUNICATIONS TECHNOLOGY CO., LTD.) 18 December 2020 (2020-12-18) entire document | 1-20 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 July 2025** | **05 August 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2025/094274**

| Patent document cited in search report | | | Publication date (day/month/year) | Patent family member(s) | | | Publication date (day/month/year) |
|---|---|---|---|---|---|---|---|
| CN | 119520502 | A | 25 February 2025 | None | | | |
| CN | 118018995 | A | 10 May 2024 | None | | | |
| US | 2020311365 | A1 | 01 October 2020 | US | 2022027594 | A1 | 27 January 2022 |
| | | | | US | 2020410188 | A1 | 31 December 2020 |
| CN | 102857619 | A | 02 January 2013 | TW | 201301850 | A | 01 January 2013 |
| CN | 104899537 | A | 09 September 2015 | None | | | |
| CN | 112099892 | A | 18 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410601613